# EUROPEAN PATENT APPLICATION

(11) **EP 4 459 329 A1**
(43) Date of publication of application: **06.11.2024**
(21) Application number: 22918716.6
(22) Date of filing: 11.11.2022
(51) Int. Cl.: G01T 1/20

(54) **RADIATION DETECTOR AND RADIATION DETECTOR ARRAY**

(30) Priority: 05.01.2022 JP 2022000428
(71) Applicant: Hamamatsu Photonics K.K., Hamamatsu-shi, Shizuoka 435-8558 (JP)
(72) Inventor: KAMAKURA Shogo, Hamamatsu-shi, Shizuoka 435-8558 (JP); NISHIMIYA Hayato, Hamamatsu-shi, Shizuoka 435-8558 (JP); KAMADA Shintaro, Hamamatsu-shi, Shizuoka 435-8558 (JP)
(74) Representative: Boult Wade Tennant LLP
(86) International application number: PCT/JP2022/042125
(87) International publication number: WO 2023/132127

(57) **Abstract**

The radiation detector includes a scintillator, first and second semiconductor photodetectors, a first wiring member electrically connected to the first semiconductor photodetector, and a second wiring member electrically connected to the second semiconductor photodetector. The scintillator includes a pair of end surfaces opposing each other in a first direction and first and second side surfaces opposing each other in a second direction intersecting the first direction, and has a rectangular shape when viewed in the first direction. The first and second side surfaces couple the pair of end surfaces. The first semiconductor photodetector includes a first semiconductor substrate disposed to oppose the first side surface. The second semiconductor photodetector includes a second semiconductor substrate disposed to oppose the second side surface.

## Description

### Technical Field

The present invention relates to a radiation detector and a radiation detector array.

### Background Art

Known radiation detectors include a scintillator having a hexahedron shape and a semiconductor photodetector including a semiconductor substrate disposed on the scintillator (for example, refer to Patent Literature 1). The scintillator generates a scintillation light in response to entry of radiation. The semiconductor photodetector detects the generated scintillation light.

### Citation List

### Patent Literature

Patent Literature 1: Japanese Unexamined Patent Publication No. 2015-83956

### Summary of Invention

### Technical Problem

An object of a first aspect of the present invention is to provide a radiation detector having high time resolution and high detection sensitivity. Objects of second and third aspects of the present invention are to provide a radiation detector array including radiation detectors having high time resolution and high detection sensitivity.

### Solution to Problem

The present inventors have intensively studied radiation detectors having high time resolution and high detection sensitivity. As a result, the present inventors have newly obtained the following knowledge and conceived the present invention. Patent Literature 1 does not disclose a radiation detector having high time resolution and high detection sensitivity.

When radiation enters a scintillator that includes a pair of end surfaces opposing each other in a first direction and is longer in the first direction, from one of the pair of end surfaces, the scintillator reliably absorbs the radiation in a high energy range and generates scintillation lights. In a configuration in which a semiconductor photodetector is disposed on another end surface of the pair of end surfaces, the scintillator can easily and reliably absorb the radiation in the high energy range.

The semiconductor photodetector detects the scintillation light emitted from the other end surface. In a configuration in which a length of the scintillator in the first direction is larger than a length of the scintillator in a direction intersecting the first direction, it is difficult to obtain high time resolution. Side surfaces coupling the pair of end surfaces and extending in the first direction are disposed at a shorter distance from the scintillation light generation point than the other end surface is. Therefore, semiconductor photodetectors disposed on the side surfaces extending in the first direction easily detect the scintillation lights with high time resolution. In a radiation detector, it is desirable to arrange the semiconductor photodetectors at positions where individual scintillation lights simultaneously generated at the same position can be detected at a short distance. This arrangement of the semiconductor photodetectors enables incident radiation to be detected with high time resolution.

In a configuration in which the scintillator includes a plurality of side surfaces, the semiconductor photodetectors can be disposed on the plurality of side surfaces, respectively. A radiation detector in which the semiconductor photodetectors are disposed on the plurality of side surfaces, respectively, achieves high detection sensitivity, as compared with a radiation detector in which one semiconductor photodetector is disposed only on one end surface.

A radiation detector according to a first aspect includes: a scintillator including a pair of end surfaces opposing each other in a first direction, and a first side surface and a second side surface opposing each other in a second direction intersecting the first direction and coupling the pair of end surfaces, the scintillator having a rectangular shape when viewed in the first direction; a first semiconductor photodetector including a first semiconductor substrate disposed to oppose the first side surface; a second semiconductor photodetector including a second semiconductor substrate disposed to oppose the second side surface; a first wiring member electrically connected to the first semiconductor photodetector; and a second wiring member electrically connected to the second semiconductor photodetector. A length of the scintillator in the first direction is longer than a length of the scintillator in the second direction and a length of the scintillator in a third direction parallel to the first side surface. A length of the first side surface in the first direction is longer than a width of the first side surface in the third direction. A length of the second side surface in the first direction is longer than a width of the second side surface in the third direction. The first semiconductor substrate includes a first portion covered with the first side surface, and a second portion disposed with the first portion in the first direction and exposed from the first side surface. The second semiconductor substrate includes a third portion covered with the second side surface, and a fourth portion disposed with the third portion in the first direction and exposed from the second side surface. Each of the first semiconductor photodetector and the second semiconductor photodetector includes a photodetection region including a plurality of avalanche photodiodes arranged to operate in Geiger mode, and a plurality of quenching resistors electrically connected in series with one of an anode or a cathode of a corresponding avalanche photodiode of the plurality of avalanche photodiodes. The first semiconductor photodetector includes a first electrode to which the plurality of quenching resistors included in the first semiconductor photodetector are connected in parallel, and a second electrode to which another of the anode or the cathode of each of the plurality of avalanche photodiodes included in the first semiconductor photodetector is electrically connected in parallel. The second semiconductor photodetector includes a third electrode to which the plurality of quenching resistors included in the second semiconductor photodetector are connected in parallel; and a fourth electrode to which another of the anode or the cathode of each of the plurality of avalanche photodiodes included in the second semiconductor photodetector is electrically connected in parallel. The photodetection region included in the first semiconductor photodetector is disposed in the first portion. The first electrode and the second electrode are disposed in the second portion. The photodetection region included in the second semiconductor photodetector is disposed in the third portion. The third electrode and the fourth electrode are disposed in the fourth portion. The first wiring member includes a conductor electrically connected to the first electrode and a conductor connected to the second electrode. The second wiring member includes a conductor electrically connected to the third electrode and a conductor connected to the fourth electrode.

According to the first aspect, the radiation detector includes the scintillator that is elongated in the first direction, the first semiconductor substrate disposed on the first side surface of the scintillator, and the second semiconductor substrate disposed on the second side surface of the scintillator. The first semiconductor photodetector detects a scintillation light incident on the first side surface. The second semiconductor photodetector detects the scintillation light incident on the second side surface. A length of the scintillator in the second direction is shorter than a length of the scintillator in the first direction. Therefore, a distance from the scintillation light generation point to each of the first side surface and the second side surface is short. An arrival time of a scintillation light to each of the first and second semiconductor photodetectors is short, and the first aspect achieves high time resolution. The first aspect includes the first semiconductor photodetector and the second semiconductor photodetector. Therefore, the first aspect achieves high detection sensitivity as compared with a radiation detector including a single semiconductor photodetector disposed on one side surface of a scintillator.

In the first aspect, when viewed in the second direction, the photodetection region included in the first semiconductor substrate may have an outline shape corresponding to an outline shape of the first side surface. When viewed in the second direction, the photodetection region included in the second semiconductor substrate may have an outline shape corresponding to an outline shape of the second side surface.

In a configuration in which the photodetection region included in the first semiconductor substrate has the outline shape corresponding to the outline shape of the first side surface, the photodetection region tends not to be disposed at a position on the first semiconductor substrate where no scintillation lights can be received. Therefore, increase in dark count and capacitance in the photodetection regions included in the first semiconductor substrate is curbed. In a configuration in which the photodetection region included in the second semiconductor substrate has the outline shape corresponding to the outline shape of the second side surface, the photodetection region tends not to be disposed at a position on the second semiconductor substrate where no scintillation lights can be received. Therefore, increase in dark count and capacitance in the photodetection regions included in the second semiconductor substrate is curbed. These configurations reduce detection errors of scintillation lights. As a result, this configuration reliably improves the time resolution and the detection sensitivity of the first semiconductor photodetector and the second semiconductor photodetector.

The first aspect may include a reinforcement body disposed between the second portion and the fourth portion. The reinforcement body may cover the second portion and the fourth portion and couple the second portion and the fourth portion.

In a configuration in which the reinforcement body disposed between the second portion and the fourth portion is provided, the reinforcement body disposed between the second portion and the fourth portion improves mechanical strength of both the second portion and the fourth portion.

In the first aspect, the first semiconductor substrate may include a first surface opposing the scintillator in the second direction and a second surface opposing the first surface in the second direction. The second semiconductor substrate may include a third surface opposing the scintillator in the second direction and a fourth surface opposing the third surface in the second direction. The second surface and the fourth surface may include polished surfaces.

In a configuration in which the second surface includes the polished surface, the first semiconductor substrate can be thinned by polishing the second surface. In a configuration in which the fourth surface includes a polished surface, the second semiconductor substrate can be thinned by polishing the fourth surface. A size of the radiation detector can be reduced in a thickness direction of the first semiconductor substrate. A size of the radiation detector can be reduced in a thickness direction of the second semiconductor substrate.

The first aspect may include: a first base including a fifth surface and a sixth surface opposing each other in the second direction and be disposed such that the first semiconductor substrate is positioned between the fifth surface and the scintillator; a second base including a seventh surface and an eighth surface opposing each other in the second direction and be disposed such that the second semiconductor substrate is positioned between the seventh surface and the scintillator; a first terminal and a second terminal disposed on the fifth surface; a third terminal and a fourth terminal disposed on the seventh surface; a first wire electrically connecting the first terminal and the first electrode; a second wire electrically connecting the second terminal and the second electrode; a third wire electrically connecting the third terminal and the third electrode; and a fourth wire electrically connecting the fourth terminal and the fourth electrode. The first base may include a fifth portion covered with the first semiconductor substrate and a sixth portion disposed with the fifth portion in the first direction and exposed from the first semiconductor substrate. The second base may include a seventh portion covered with the second semiconductor substrate and an eighth portion disposed with the seventh portion in the first direction and exposed from the second semiconductor substrate. The first terminal and the second terminal may be both positioned on the sixth portion. The third terminal and the fourth terminal may be both positioned on the eighth portion.

A configuration in which the first and second bases are provided improves the mechanical strength of the radiation detector. Therefore, this configuration reliably achieves a radiation detector having high mechanical strength.

The first aspect may include: a first cover body disposed such that the first semiconductor substrate is positioned between the first cover body and the scintillator; and a second cover body disposed such that the second semiconductor substrate is positioned between the second cover body and the scintillator. Each of the first cover body and the second cover body may include at least one of a light reflector and an electrical insulator.

For example, a configuration in which each of the first cover body and the second cover body includes the light reflector improves light reflection characteristics of scintillation lights. For example, a configuration in which each of the first cover body and the second cover body includes an electrical insulator improves electrical insulation between the radiation detectors adjacent to each other.

In the first aspect, the first wiring member may be disposed on the same side as the scintillator relative to the first semiconductor substrate. The second wiring member may be disposed on the same side as the scintillator relative to the second semiconductor substrate.

In a configuration in which the first wiring member is disposed on the same side as the scintillator relative to the first semiconductor substrate, a substrate for connecting the first wiring member to the first and second electrodes through, for example, die bonding does not need to be provided. In a configuration in which the second wiring member is disposed on the same side as the scintillator relative to the second semiconductor substrate, a substrate for connecting the second wiring member to the first and second electrodes through, for example, die bonding does not need to be provided. Therefore, this configuration more reliably simplifies the configuration of the radiation detector.

In the first aspect, the first wiring member and the second wiring member and the first semiconductor substrate and the second semiconductor substrate may have flexibility. The flexibility of the first wiring member may be higher than the flexibility of the first semiconductor substrate. The flexibility of the second wiring member may be higher than the flexibility of the second semiconductor substrate.

In a configuration in which the flexibility of the first wiring member is higher than the flexibility of the first semiconductor substrate, vibration of the first wiring member tends not to be transmitted to the first semiconductor substrate. A force from the first wiring member tends not to be applied to the first semiconductor substrate, and the first semiconductor substrate tends not to be physically damaged. In a configuration in which the flexibility of the second wiring member is higher than the flexibility of the second semiconductor substrate, vibration of the second wiring member tends not to be transmitted to the second semiconductor substrate. A force from the second wiring member tends not to be applied to the second semiconductor substrate, and the second semiconductor substrate tends not to be physically damaged. Therefore, this configuration reliably maintains the mechanical strength of the radiation detector.

A radiation detector array according to a second aspect includes a plurality of radiation detectors disposed one-dimensionally. Each of the plurality of radiation detectors is the above-described radiation detector. The scintillator further includes a pair of third side surfaces coupling the pair of end surfaces and coupling the first side surface and the second side surface. Any two radiation detectors adjacent to each other of the plurality of radiation detectors are disposed such that the third side surface of the scintillator included in one radiation detector and the third side surface of the scintillator included in another radiation detector oppose each other.

The second aspect realizes the radiation detector array in which the plurality of radiation detectors having high time resolution and high detection sensitivity are one-dimensionally disposed.

In the second aspect, the first semiconductor photodetectors included in the plurality of radiation detectors may be integrally formed. The second semiconductor photodetectors included in the plurality of radiation detectors may be integrally formed.

A configuration in which the above-described first semiconductor photodetectors are integrally formed and the above-described second semiconductor photodetectors are integrally formed improves mechanical strength of the radiation detector array in which the plurality of radiation detectors are one-dimensionally disposed.

The second aspect may include a plurality of radiation detectors two-dimensionally disposed in the matrix. Each of the plurality of radiation detectors disposed in a row direction of the plurality of radiation detectors may be the above-described radiation detector array. Any two radiation detectors adjacent to each other in a column direction of the plurality of radiation detectors may be disposed such that either the first semiconductor photodetector or the second semiconductor photodetector included in one radiation detector and either the first semiconductor photodetector or the second semiconductor photodetector included in the other radiation detector oppose each other in the column direction.

A configuration in which the plurality of radiation detectors are two-dimensionally disposed in the matrix realizes the radiation detector array in which the radiation detectors having high time resolution and high detection sensitivity are two-dimensionally disposed in the matrix.

A radiation detector array according to a third aspect includes a plurality of radiation detectors disposed one-dimensionally. Each of the plurality of radiation detectors is the above-described radiation detector. The scintillator further includes a pair of third side surfaces coupling the pair of end surfaces and coupling the first side surface and the second side surface. Any two radiation detectors adjacent to each other of the plurality of radiation detectors are disposed such that the third side surface of the scintillator included in one radiation detector and either the first semiconductor photodetector or the second semiconductor photodetector included in the other radiation detector oppose each other.

The third aspect realizes the radiation detector array in which the radiation detectors having high time resolution and high detection sensitivity are one-dimensionally disposed.

The third aspect may include a plurality of radiation detectors two-dimensionally disposed in the matrix. Each of the plurality of radiation detectors disposed in a row direction of the plurality of radiation detectors may be the above-described radiation detector array. Any two radiation detectors adjacent to each other in a column direction of the plurality of radiation detectors may be disposed such that the third side surface of the scintillator included in one radiation detector and either the first semiconductor photodetector or the second semiconductor photodetector included in the other radiation detector oppose each other in the column direction.

A configuration in which the plurality of radiation detectors are two-dimensionally disposed in the matrix realizes the radiation detector array in which the radiation detectors having high time resolution and high detection sensitivity are two-dimensionally disposed in the matrix. In a configuration in which the third side surface and either the first semiconductor photodetector or the second semiconductor photodetector included in the other radiation detector oppose each other in the column direction, the plurality of radiation detectors are two-dimensionally disposed in a smaller space as compared with a configuration in which the first semiconductor photodetector and the second semiconductor photodetector oppose each other.

### Advantageous Effects of Invention

A first aspect of the present invention provides a radiation detector having high time resolution and high detection sensitivity. Second and third aspects of the present invention provide radiation detector arrays including the radiation detectors having high time resolution and high detection sensitivity.

### Brief Description of Drawings

FIG. 1 is a perspective view illustrating a radiation detector according to a first embodiment.
FIG. 2 is a perspective view illustrating the radiation detector according to the first embodiment.
FIG. 3 is a plan view illustrating a first semiconductor photodetector.
FIG. 4 is a plan view illustrating a second semiconductor photodetector.
FIG. 5 is a diagram illustrating an equivalent circuit of a photodetection region.
FIG. 6 is a side view illustrating the radiation detector according to the first embodiment.
FIG. 7 is a side view illustrating the radiation detector according to the first embodiment.
FIG. 8 is a side view illustrating the radiation detector according to the first embodiment.
FIG. 9 is a perspective view illustrating the radiation detector according to the first embodiment.
FIG. 10 is a perspective view illustrating the radiation detector according to the first embodiment.
FIG. 11 is a view illustrating paths of some scintillation lights.
FIG. 12 is a perspective view illustrating a radiation detector array according to a second embodiment.
FIG. 13 is a perspective view illustrating a radiation detector array according to a second embodiment.
FIG. 14 is a perspective view illustrating a radiation detector array according to a third embodiment.
FIG. 15 is a perspective view illustrating a radiation detector array according to a third embodiment.
FIG. 16 is a flowchart illustrating a method for producing a radiation detector.

### Description of Embodiments

Embodiments of the present invention will be described in detail with reference to the accompanying drawings. Note that, in the description, the same reference numerals will be used for the same elements or elements having the same functions, and redundant description will be omitted.

### (First Embodiment)

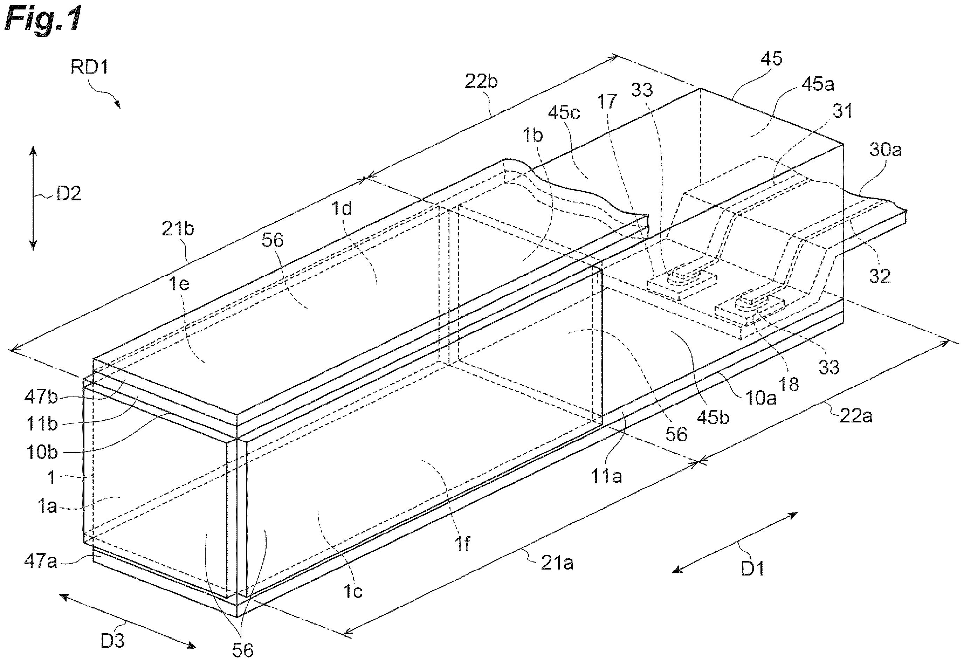

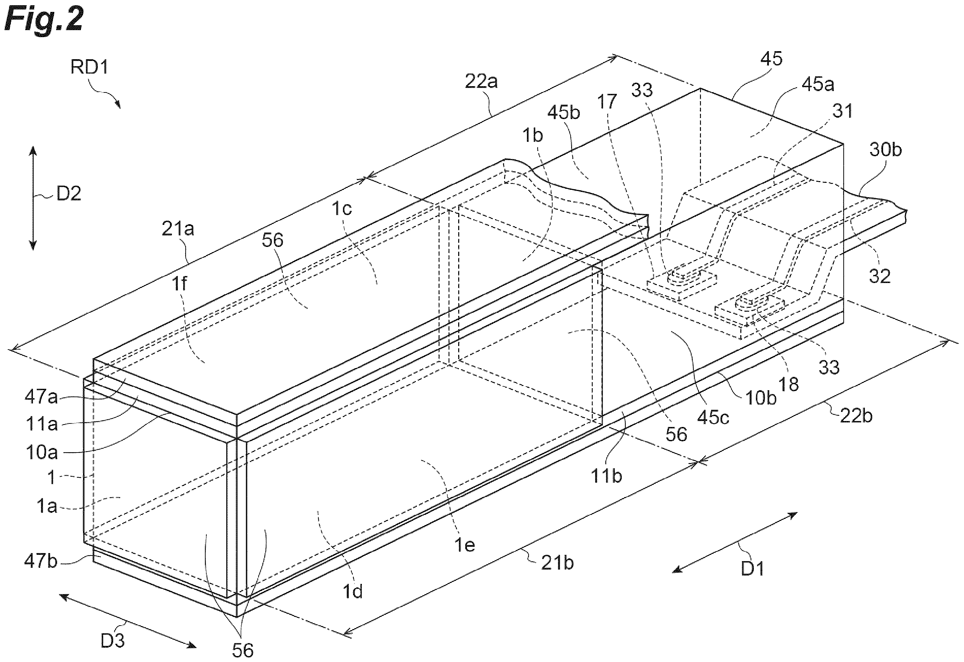

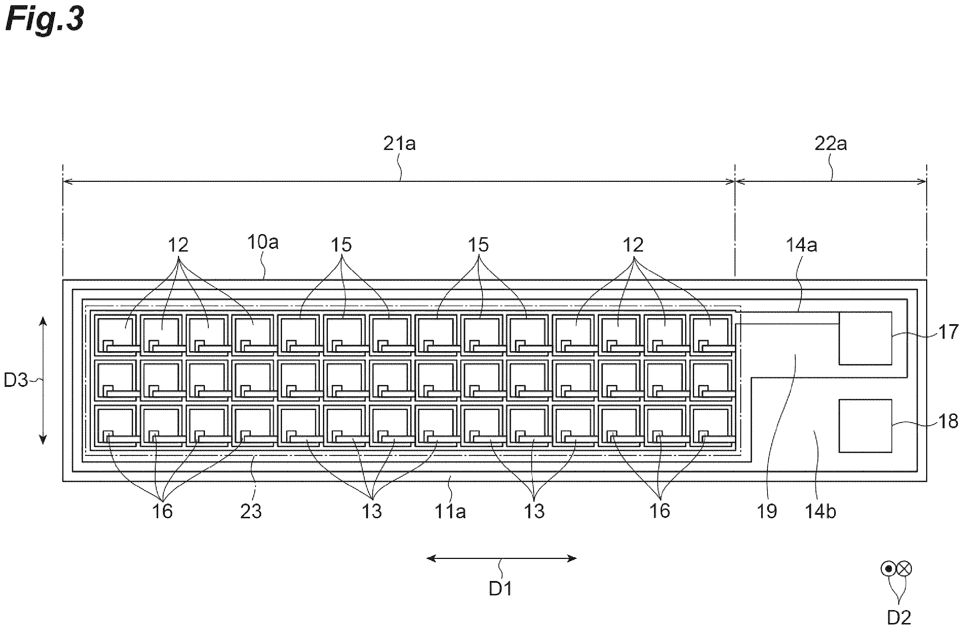

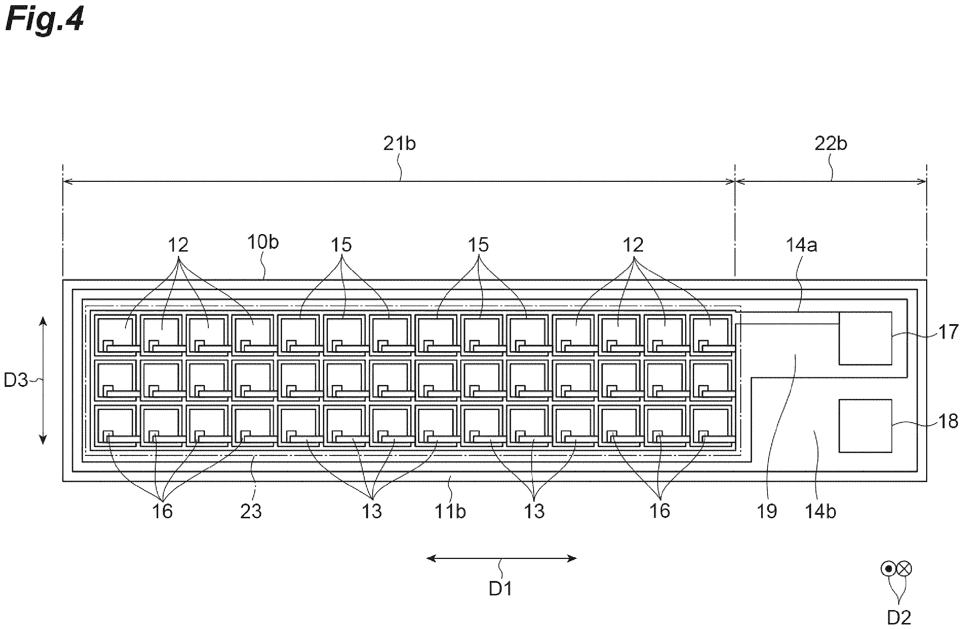

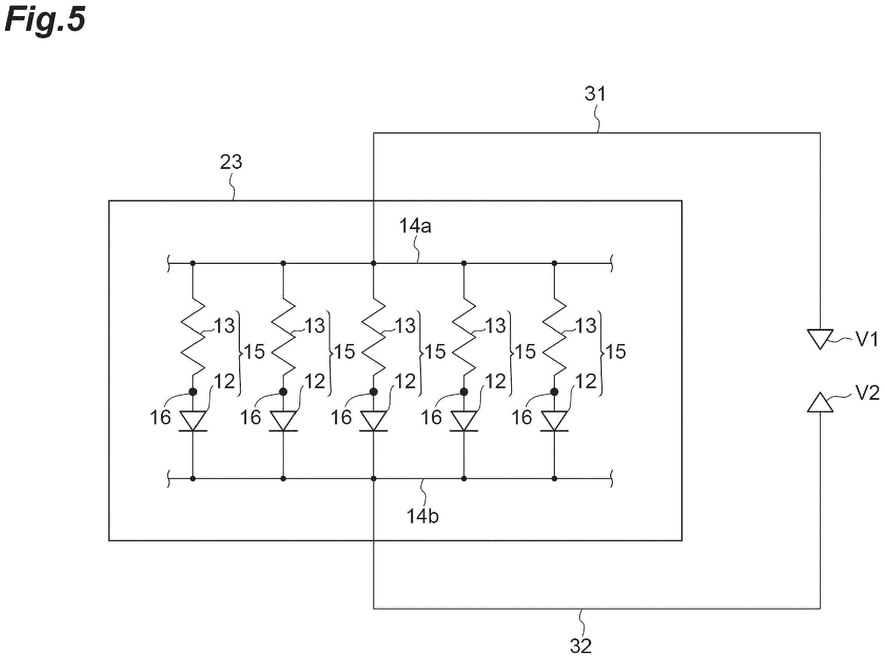

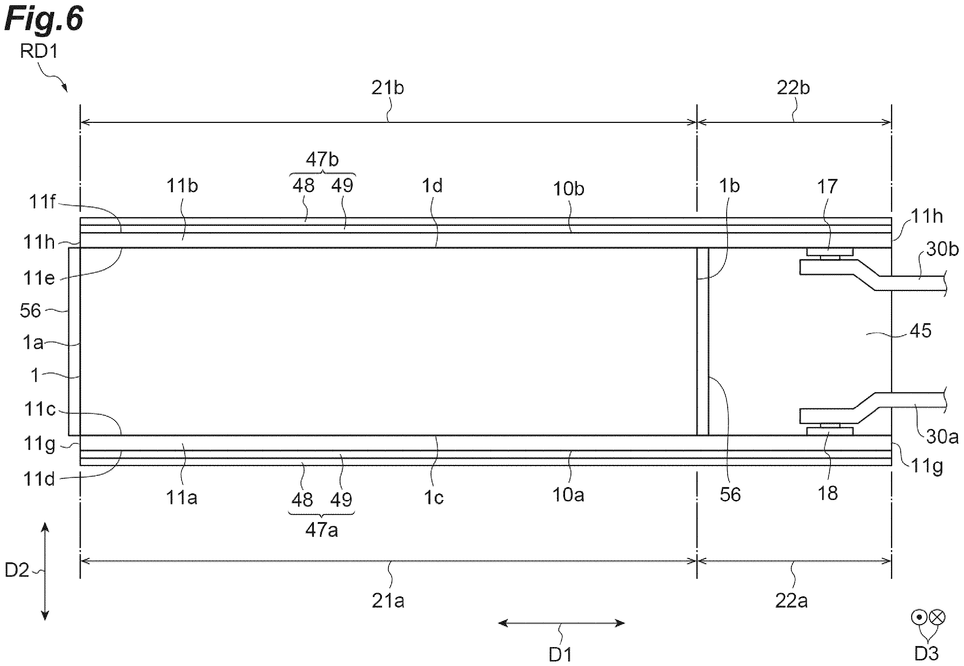

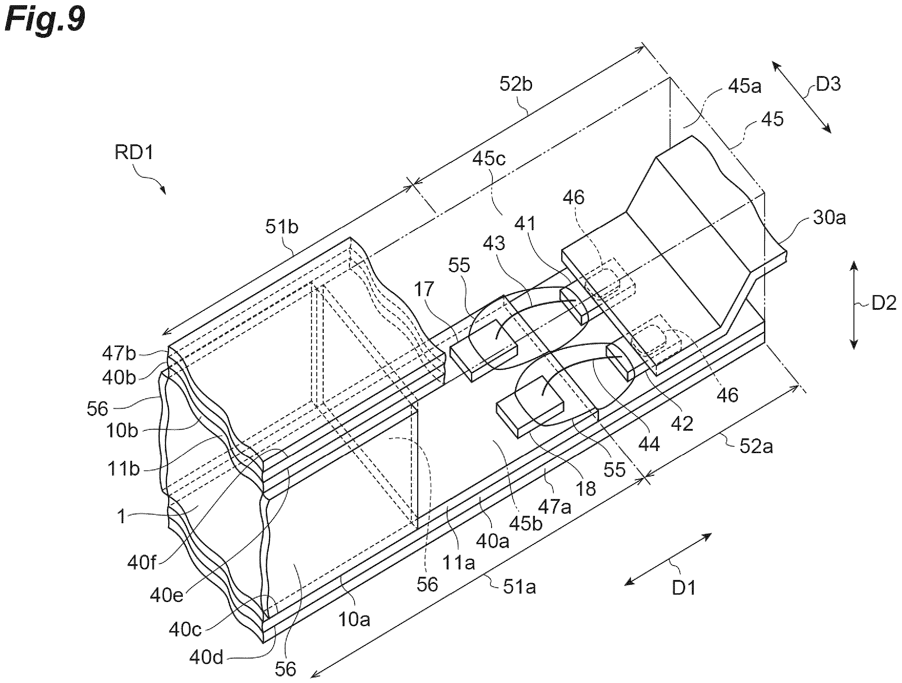

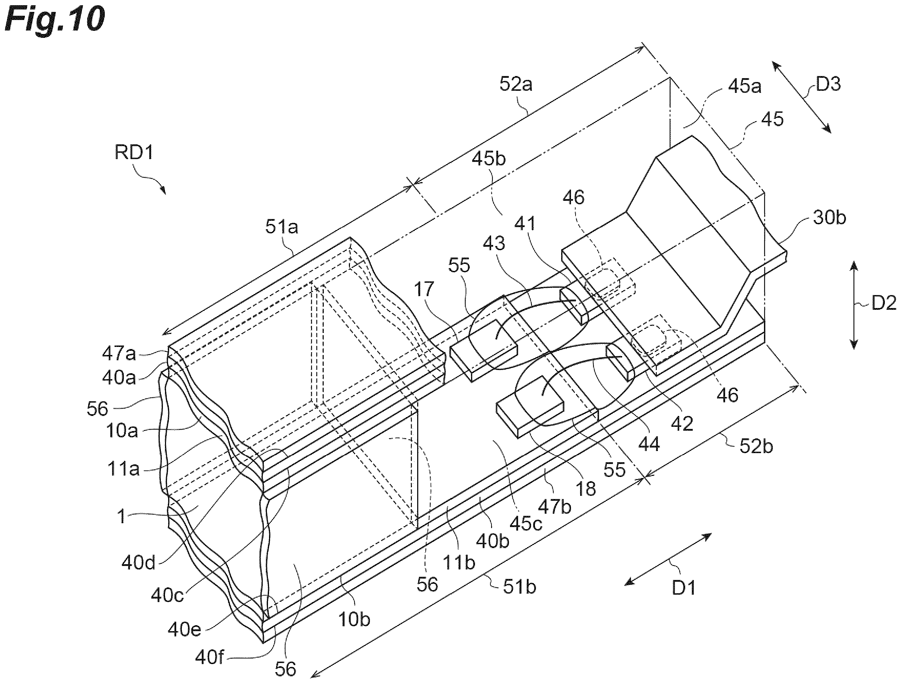

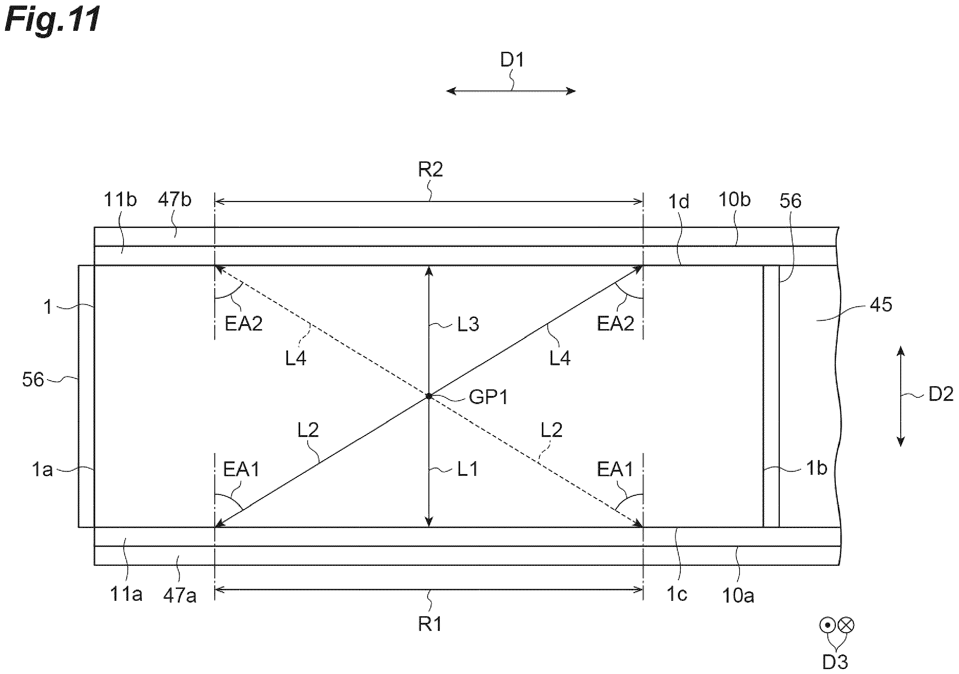

A configuration of a radiation detector RD1 according to a first embodiment will be described with reference to FIGS. 1 to 11. FIGS. 1 and 2 are perspective views illustrating the radiation detector according to the first embodiment. FIG. 3 is a plan view illustrating a first semiconductor photodetector. FIG. 4 is a plan view illustrating a second semiconductor photodetector. FIG. 5 is a diagram illustrating an equivalent circuit of a photodetection region. FIGS. 6 to 8 are side views illustrating the radiation detector according to the first embodiment. FIGS. 9 and 10 are perspective views illustrating the radiation detector according to the first embodiment. FIG. 11 is a view illustrating paths of some scintillation lights. In FIGS. 1 and 9, illustration of a part of the second semiconductor photodetector is omitted for the sake of description. In FIGS. 2 and 10, illustration of a part of the first semiconductor photodetector is omitted for the sake of description. FIGS. 9 and 10 illustrate a reinforcement body by a two-dot dashed line.

As illustrated in FIGS. 1 and 2, the radiation detector RD1 includes a scintillator 1, a semiconductor photodetector 10a, a semiconductor photodetector 10b, a wiring member 30a, and a wiring member 30b. The scintillator 1 generates a scintillation light in response to entry of radiation on the scintillator 1. The scintillation light contains, for example, fluorescence. The semiconductor photodetectors 10a and 10b detect scintillation lights generated in the scintillator 1. The semiconductor photodetector 10a includes a semiconductor substrate 11a and is electrically connected to the wiring member 30a. The semiconductor photodetector 10b includes a semiconductor substrate 11b and is electrically connected to the wiring member 30b. For example, when the semiconductor photodetector 10a constitutes a first semiconductor photodetector, the semiconductor photodetector 10b constitutes a second semiconductor photodetector. For example, when the wiring member 30a constitutes a first wiring member, the wiring member 30b constitutes a second wiring member. For example, when the semiconductor substrate 11a constitutes a first semiconductor substrate, the semiconductor substrate 11b constitutes a second semiconductor substrate.

The scintillator 1 includes a pair of end surfaces 1a and 1b opposing each other, a pair of side surfaces 1c and 1d opposing each other, and a pair of side surfaces 1e and 1f opposing each other. The end surfaces 1a and 1b, the side surfaces 1c and 1d, and the side surfaces 1e and 1f constitute outer surfaces of the scintillator 1. The end surfaces 1a and 1b oppose each other in a first direction D1. The end surfaces 1a and 1b define both ends of the scintillator 1 in the first direction D1. The side surfaces 1c and 1d oppose each other in a second direction D2 intersecting the first direction D1 and couple the pair of end surfaces 1a and 1b. In the present embodiment, the second direction D2 coincides with a direction orthogonal to the side surface 1c. The side surfaces 1c and 1d define both ends of the scintillator 1 in the second direction D2. The side surfaces 1e and 1f couple the end surfaces 1a and 1b and couple the side surface 1c and the side surface 1d. The side surfaces 1e and 1f oppose each other in a third direction D3 intersecting the first direction D1 and the second direction D2. The third direction D3 corresponds with a direction parallel to the side surface 1c. In the present embodiment, the first direction D1, the second direction D2, and the third direction D3 are orthogonal to each other. The side surfaces 1e and 1f define both ends of the scintillator 1 in the third direction D3. For example, when the side surface 1c constitutes a first side surface, the side surface 1d constitutes a second side surface, and the side surfaces 1e and 1f constitute a pair of third side surfaces.

The end surface 1a and the end surface 1b extend in the second direction D2 to couple the side surface 1c and the side surface 1d. The end surface 1a and the end surface 1b extend in the third direction D3 to couple the side surface 1e and the side surface 1f. The side surface 1c and the side surface 1d extend in the first direction D1 to couple the end surface 1a and the end surface 1b. The side surface 1c and the side surface 1d extend in the third direction D3 to couple the side surface 1e and the side surface 1f. The side surface 1e and the side surface 1f extend in the first direction D1 to couple the end surface 1a and the end surface 1b. The side surface 1e and the side surface 1f extend in the second direction D2 to couple the side surface 1c and the side surface 1d. The side surface 1e and the side surface 1f are adjacent to the side surface 1c.

A length of the scintillator 1 in the first direction D1 is longer than a length of the scintillator 1 in the second direction D2. A length of the scintillator 1 in the first direction D1 is longer than a length of the scintillator 1 in the third direction D3. The first direction D1 is a longitudinal direction of the scintillator 1. A length of the side surface 1c in the first direction D1 is longer than a width of the side surface 1c in the third direction D3. A length of the side surface 1d in the first direction D1 is longer than a width of the side surface 1d in the third direction D3.

The end surfaces 1a and 1b each have a rectangular shape when viewed in directions orthogonal to the end surfaces 1a and 1b. The side surfaces 1c and 1d each have a rectangular shape when viewed in directions orthogonal to the side surfaces 1c and 1d. The side surfaces 1e and 1f each have a rectangular shape when viewed in directions orthogonal to the side surfaces 1e and 1f. In the present embodiment, the scintillator 1 has a rectangular shape when viewed in the first direction D1, and has a rectangular shape when viewed in the second direction D2 and the third direction D3. The scintillator 1 has, for example, a rectangular parallelepiped shape. The length of the scintillator 1 in the first direction D1 is, for example, about 20 mm. The length of the scintillator 1 in the second direction D2 is, for example, about 4 mm. A length of the scintillator 1 in the third direction D3 is, for example, about 4 mm. The "rectangular shape" in this specification includes, for example, a shape in which each corner is chamfered and a shape in which each corner is rounded. The "rectangular parallelepiped shape" in this specification includes a rectangular parallelepiped shape in which corner portions and ridge portions are chamfered and a rectangular parallelepiped shape in which corner portions and ridge portions are rounded.

The scintillator 1 includes, for example, a crystalline scintillator, a ceramic scintillator, or a plastic scintillator. The crystalline scintillator contains, for example, CsI, NaI, LaBr₃, cerium-doped lutetium yttrium orthosilicate (LYSO(Ce)), gadolinium aluminum gallium garnet (GAGG), lutetium oxyorthosilicate (LSO), bismuth germanate (BGO), or ruthenium aluminum garnet (LuAG). The ceramic scintillator contains, for example, a sintered body of an inorganic phosphor. The plastic scintillator contains, for example, polyethylene terephthalate (PET).

The semiconductor substrate 11a is disposed to oppose the side surface 1c. The semiconductor substrate 11b is disposed to oppose the side surface 1d. The semiconductor substrates 11a and 11b contain, for example, Si. The semiconductor substrate 11b has the same configuration and the same function as, for example, the semiconductor substrate 11a disposed on the side surface 1c except that the semiconductor substrate 11b is disposed on the side surface 1d. The semiconductor substrate 11a is disposed on the side surface 1c with an adhesive, for example. The semiconductor substrate 11b is disposed on the side surface 1d with an adhesive, for example.

As illustrated in FIG. 3, the semiconductor substrate 11a includes a portion 21a and a portion 22a. In the present embodiment, the portion 21a is covered with the side surface 1c. The portion 22a is exposed from the side surface 1c. The portion 21a and the portion 22a are disposed in the first direction D1. As illustrated in FIG. 4, the semiconductor substrate 11b includes a portion 21b and a portion 22b. In the present embodiment, the portion 21b is covered with the side surface 1d. The portion 22b is exposed from the side surface 1d. The portion 21b and the portion 22b are disposed in the first direction D1. For example, when the portion 21a constitutes a first portion, the portion 22a constitutes a second portion. For example, when the portion 21b constitutes a third portion, the portion 22b constitutes a fourth portion.

Each of the semiconductor photodetector 10a and the semiconductor photodetector 10b includes a photodetection region 23. The photodetection region 23 included in the semiconductor photodetector 10a is disposed in the portion 21a. The photodetection region 23 included in the semiconductor photodetector 10b is disposed in the portion 21b. The photodetection region 23 includes a plurality of avalanche photodiodes 12 and a plurality of quenching resistors 13. The avalanche photodiode 12 receives a scintillation light and generates photoelectrons from the received scintillation light through photoelectric conversion. Conductive wires 14a and 14b are disposed in the portion 21a. Conductive wires 14a and 14b are disposed in the portion 21b. The conductive wire 14a constitutes a wiring pattern for signal readout. The conductive wire 14a is patterned in, for example, a grid shape when viewed in the second direction D2. A grid-like pattern of the conductive wire 14a surrounds one photodetection unit 15. The one photodetection unit 15 includes one avalanche photodiode 12 and one quenching resistor 13. The one quenching resistor 13 is electrically connected in series with the avalanche photodiode 12 corresponding to the one quenching resistor 13. A plurality of photodetection units 15 are disposed in each of the portion 21a and the portion 21b. The photodetection units 15 are two-dimensionally disposed in the matrix, for example. One photodetection unit 15 may be disposed in each photodetection region 23. Therefore, the photodetection region 23 may include one avalanche photodiode 12 and one quenching resistor 13.

As illustrated in FIG. 5, each of the plurality of quenching resistors 13 is electrically connected in series with one of an anode and a cathode of the corresponding avalanche photodiode 12 of the plurality of avalanche photodiodes 12. The avalanche photodiode 12 includes a contact electrode 16. The contact electrode 16 is electrically connected to one of the anode or the cathode. One end of the quenching resistor 13 is electrically connected in series with the contact electrode 16. The other end of each quenching resistor 13 is electrically connected in series with the conductive wire 14a constituting the wiring pattern. The conductive wire 14b is electrically connected in parallel with the other of the anodes and the cathodes of the plurality of avalanche photodiodes 12.

The electrical resistivity of the quenching resistors 13 is higher than the electrical resistivity of the electrode 17 and the electrode 18. The quenching resistor 13 contains, for example, polysilicon. A material of the quenching resistor 13 may include, for example, SiCr, NiCr, or FeCr. The quenching resistor 13 is formed by, for example, a chemical vapor deposition (CVD) method or a sputtering method. For example, in the semiconductor photodetector 10a, when the electrode 17 constitutes a first electrode, the electrode 18 constitutes a second electrode. For example, in the semiconductor photodetector 10b, when the electrode 17 constitutes a third electrode, the electrode 18 constitutes a fourth electrode.

As illustrated in FIGS. 3 and 4, each of the semiconductor photodetector 10a and the semiconductor photodetector 10b includes the electrode 17 and the electrode 18. The electrode 17 and the electrode 18 included in the semiconductor photodetector 10a are disposed in the portion 22a. The electrode 17 and the electrode 18 included in the semiconductor photodetector 10b are disposed in the portion 22b. In each of the semiconductor photodetector 10a and the semiconductor photodetector 10b, the plurality of quenching resistors 13 are electrically connected in parallel to the electrode 17 via the conductive wire 14a. Each of the plurality of quenching resistors 13 is electrically connected in series with one of an anode and a cathode of the corresponding avalanche photodiode 12 of the plurality of avalanche photodiodes 12. The other of the anode and the cathode of each of the plurality of avalanche photodiodes 12 is electrically connected in parallel with the electrode 18 via the conductive wire 14b. The electrode 17 and the electrode 18 contain, for example, aluminum or an aluminum composite. The aluminum composite contains, for example, AlSi, AlCu, or AlSiCu. The electrode 17 and the electrode 18 are formed by, for example, a plating method, a vapor deposition method, or a sputtering method.

In the present embodiment, the plurality of quenching resistors 13 are electrically connected in series with an anode of the corresponding avalanche photodiode 12 of the plurality of avalanche photodiodes 12, for example. In this case, the cathodes of the plurality of avalanche photodiodes 12 are electrically connected in parallel with the electrode 18. Each of the plurality of quenching resistors 13 is electrically connected in series with the cathode of the corresponding avalanche photodiode 12 of the plurality of avalanche photodiodes 12. In this case, the electrode 18 is electrically connected in parallel with the anodes of the plurality of avalanche photodiodes 12.

Each avalanche photodiode 12 is arranged to operate in Geiger mode. In Geiger mode, a reverse bias voltage is applied to the avalanche photodiode 12. The reverse bias voltage is, for example, a reverse voltage higher than a breakdown voltage of the avalanche photodiode 12. For example, a potential V1 is applied to the anode of the avalanche photodiode 12, and a potential V2 positive relative to the potential V1 is applied to the cathode of the avalanche photodiode 12. These potentials have relative polarities, and for example, one of the potentials may be a ground potential. The photodetection units 15 are electrically connected in parallel.

Each of the avalanche photodiodes 12 may be a so-called reach-through avalanche photodiode or a so-called reverse avalanche photodiode. The reach-through avalanche photodiode 12 is included in, for example, the radiation detector RD1 including the scintillator 1 that generates the scintillation light having a long wavelength. For example, the reach-through avalanche photodiode is used when the scintillation light is a long-wavelength ray. The reverse avalanche photodiode 12 is used, for example, when the scintillation light is a short-wavelength ray. The reach-through or reverse avalanche photodiode 12 is arranged to operate in Geiger mode. The radiation detector RD1 may include an avalanche photodiode 12 operating in a linear mode. The avalanche photodiode 12 operating in the linear mode may be a so-called reach-through avalanche photodiode or a so-called reverse avalanche photodiode.

On the semiconductor substrates 11a and 11b, for example, the conductive wire 14a and the conductive wire 14b, the electrode 17 connected to the conductive wire 14a, and the electrode 18 connected to the conductive wire 14b are disposed. On the semiconductor substrates 11a and 11b, for example, the conductive wire 14a and an insulating layer 19 on the conductive wire 14b are disposed. In the semiconductor substrate 11a, the insulating layer 19 extends over the portion 21a and the portion 22a. In the semiconductor substrate 11b, the insulating layer 19 extends over the portion 21b and the portion 22b. In the portion 22a and the portion 22b, the electrode 17 and the conductive wire 14a are insulated from the electrode 18 and the conductive wire 14b with the insulating layer 19. In the portions 21a and 21b, the insulating layer 19 is formed on the plurality of photodetection units 15. The insulating layer 19 contains, for example, SiO₂ or SiN. The insulating layer 19 is formed by, for example, a thermal oxidation method, a sputtering method, or a CVD method.

As illustrated in FIGS. 1, 2, and 6, the wiring member 30a is disposed on the same side as the scintillator 1 relative to the semiconductor substrate 11a, for example. At least a part of the wiring member 30a and the scintillator 1 are disposed in front of the same surface of the semiconductor substrate 11a, for example. The wiring member 30a, the semiconductor substrate 11a, and the scintillator 1 are disposed on a surface 11c. The wiring member 30b is disposed on the same side as the scintillator 1 relative to the semiconductor substrate 11b. At least apart of the wiring member 30b and the scintillator 1 are disposed in front of the same surface of the semiconductor substrate 11b, for example. The wiring member 30b, the semiconductor substrate 11b, and the scintillator 1 are disposed on a surface 11e. The wiring member 30b has the same configuration and the same function as, for example, the wiring member 30a electrically connected to the semiconductor substrate 11a except that the wiring member 30b is electrically connected to the semiconductor substrate 11b.

The wiring members 30a and 30b each include a conductor 31 and a conductor 32. The conductor 31 included in the wiring member 30a is electrically connected to the electrode 17 of the semiconductor photodetector 10a. The conductor 31 included in the wiring member 30b is electrically connected to the electrode 17 of the semiconductor photodetector 10b. The conductor 32 included in the wiring member 30a is electrically connected to the electrode 18 included in the semiconductor photodetector 10a. The conductor 32 included in the wiring member 30b is electrically connected to the electrode 18 included in the semiconductor photodetector 10b. The conductor 31 included in the wiring member 30a is electrically connected to the electrode 17 included in the semiconductor photodetector 10a via a conductive bump 33, for example. The conductor 31 included in the wiring member 30b is electrically connected to the electrode 17 included in the semiconductor photodetector 10b via a conductive bump 33, for example. The conductor 32 included in the wiring member 30a is connected to the electrode 18 included in the semiconductor photodetector 10a via the conductive bump 33, for example. The conductor 32 included in the wiring member 30b is connected to the electrode 18 included in the wiring member 30b via the conductive bump 33, for example. The conductive bump 33 includes, for example, solder, an anisotropic conductive film (ACF), or an anisotropic conductive paste (ACP). The solder includes, for example, Sn-Ag-Cu solder. The conductive bump 33 may include, for example, an Au bump, an Ni bump, or a Cu bump.

In the present embodiment, when the radiation detector RD1 is driven, the potential V1 is applied to the anodes of the avalanche photodiodes 12 via the conductor 31, and the potential V2 is applied to the cathodes of the avalanche photodiodes 12 via the conductor 32. The potential V1 may be applied to the cathodes of the avalanche photodiodes 12 via the conductor 32, and the potential V2 may be applied to the anodes of the avalanche photodiodes 12 via the conductor 31. The conductor 31 and the conductor 32 contain, for example, Al, Cu, Cu/Ni/Au, or Cu/Ni/Pd/Au. The conductor 31 and the conductor 32 are formed by, for example, a sputtering method or a plating method.

The wiring member 30a and the wiring member 30b, and the semiconductor substrate 11a and the semiconductor substrate 11b have flexibility. The flexibility of the wiring member 30a is higher than the flexibility of the semiconductor substrate 11a. The flexibility of the wiring member 30b is higher than the flexibility of the semiconductor substrate 11b. The flexibility of the wiring member 30a and the flexibility of the wiring member 30b are equal to each other, for example. The flexibility of the wiring member 30a and the flexibility of the wiring member 30b may be different from each other.

When viewed in the second direction D2, an outline of the photodetection region 23 included in the semiconductor substrate 11a is formed along an outline of the side surface 1c. Therefore, a plurality of edges constituting the outline of the photodetection region 23 are formed along a corresponding edge of the plurality of edges of the outline of the side surface 1c when viewed in the second direction D2. When viewed in the second direction D2, an outline of the photodetection region 23 is formed along an outline of the side surface 1d. Therefore, a plurality of edges constituting the outline of the photodetection region 23 are formed along a corresponding edge of a plurality of edges constituting the outline of the side surface 1d when viewed in the second direction D2. When viewed in the second direction D2, the photodetection region 23 has an outline shape corresponding to an outline shape of the side surface 1c. The photodetection units 15 are all disposed such that the photodetection region 23 has the outline shape corresponding to the outline shape of the side surface 1c, when viewed in the second direction D2. When viewed in the second direction D2, the photodetection region 23 included in the semiconductor substrate 11b has the outline shape corresponding to the outline shape of the side surface 1d. The photodetection units 15 are all disposed such that the photodetection region 23 has the outline shape corresponding to the outline shape of the side surface 1d, when viewed in the second direction D2. In the present embodiment, the outline shape of the side surface 1c is a rectangular shape when viewed in the second direction D2, and the photodetection region 23 has a rectangular outline shape corresponding to the outline shape of the side surface 1c. The outline shape of the side surface 1d is a rectangular shape when viewed in the second direction D2, and the photodetection region 23 has a rectangular outline shape corresponding to the outline shape of the side surface 1d.

As illustrated in FIGS. 1 and 2, the radiation detector RD1 includes, for example, a reinforcement body 45. For example, the reinforcement body 45 is disposed between the portion 22a and the portion 22b. In the present embodiment, the reinforcement body 45 covers the portion 22a and the portion 22b, and couples the portion 22a and the portion 22b. The reinforcement body 45 is in contact with the portion 22a and the portion 22b and the scintillator 1, for example. The reinforcement body 45 includes, for example, surfaces 45a, 45b, and 45c. The surfaces 45a, 45b, and 45c are exposed from the portion 22a and the portion 22b and the scintillator 1, for example. The surface 45a oppose the end surface 1b in the first direction D1, for example. The surfaces 45b and 45c oppose each other in the third direction D3, for example.

The reinforcement body 45 contains, for example, a resin. For example, the resin of the reinforcement body 45 fills a space demarcated by the portion 22a and the portion 22b and the scintillator 1. The resin of the reinforcement body 45 contains, for example, a thermosetting resin. The resin of the reinforcement body 45 contains, for example, an epoxy resin, a silicone resin, an acrylic resin, a polyimide resin, a phenol resin, or a para-xylylene-based polymer.

In the present embodiment, the reinforcement body 45 includes, for example, a block. The block of the reinforcement body 45 has, for example, a shape corresponding to the space demarcated by the portion 22a and the portion 22b and the scintillator 1. The block of the reinforcement body 45 includes, for example, a recess formed not to interfere with the wiring member 30a and the wiring member 30b. The block of the reinforcement body 45 is disposed between the portions 22a and 22b, for example. In the present embodiment, the block of the reinforcement body 45 is fixed to the portion 22a and the portion 22b with, for example, an adhesive. The adhesive contains, for example, an epoxy resin, a silicone resin, an acrylic resin, a polyimide resin, or a phenol resin.

The block of the reinforcement body 45 contains, for example, metal. The metal block contains, for example, Al, a titanium alloy, a nickel alloy, or stainless steel. The block of the reinforcement body 45 includes, for example, a glass block. The glass block contains, for example, quartz glass or borosilicate glass. The block of the reinforcement body 45 includes, for example, a ceramic block. The ceramic block includes, for example, alumina, silicon nitride, silicon carbide, sapphire, zirconia, cordierite, yttria, aluminum nitride, cermet, mullite, steatite, or forsterite. The block of the reinforcement body 45 includes, for example, a resin block. The resin block contains, for example, an epoxy resin, a silicone resin, an acrylic resin, a polyimide resin, a phenol resin, or a para-xylylene-based polymer.

As illustrated in FIG. 6, the semiconductor substrate 11a includes the surface 11c and a surface 11d opposing each other in the second direction D2. The surface 11c oppose the scintillator 1 in the second direction D2. The surface 11d oppose the surface 11c in the second direction D2. In the present embodiment, one of the anode and the cathode of each of the avalanche photodiodes 12 is disposed at the surface 11c, and the other of the anode and the cathode of each of the avalanche photodiodes 12 is disposed at the surface 11d. For example, when the surface 11c constitutes the first surface, the surface 11d constitutes the second surface.

The semiconductor substrate 11b includes the surface 11e and a surface 11f opposing each other in the second direction D2. The surface 11e oppose the scintillator 1 in the second direction D2. The surface 11f oppose the surface 11e in the second direction D2. In the present embodiment, one of the anode and the cathode of each of the avalanche photodiodes 12 is disposed at the surface 11e, and the other of the anode and the cathode of each of the avalanche photodiodes 12 is disposed at the surface 11f. For example, when the surface 11e constitutes the third surface, the surface 11f constitutes the fourth surface.

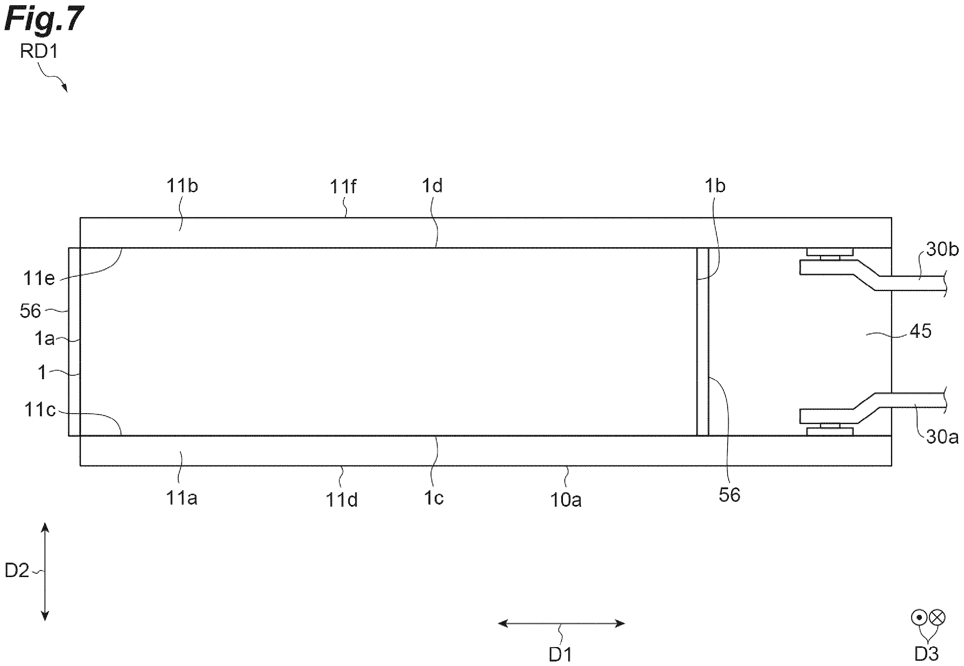

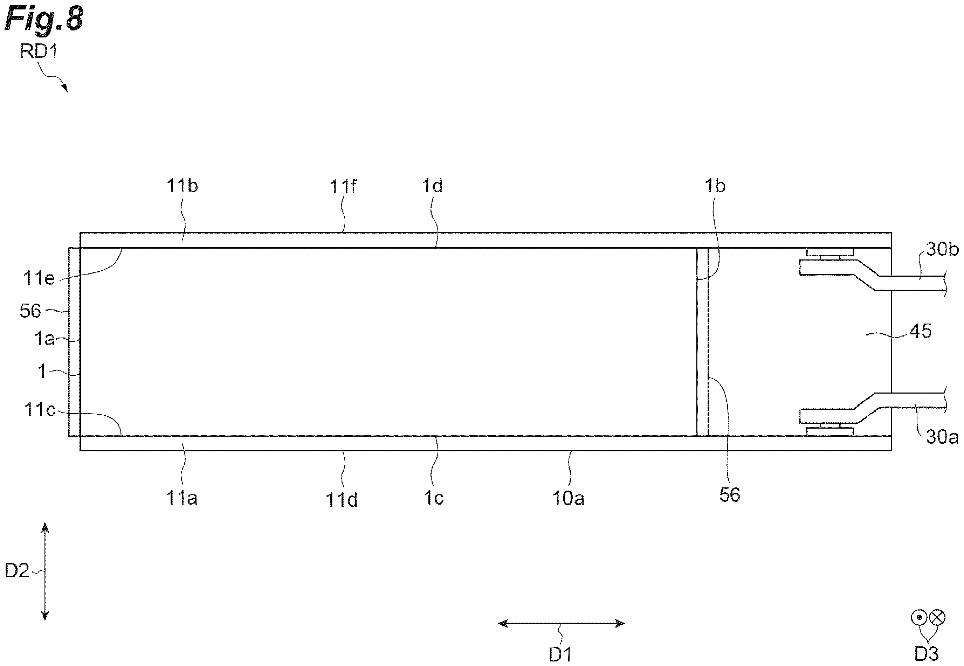

The surfaces 11d and 11f include, for example, polished surfaces. For example, after the semiconductor substrates 11a and 11b are disposed on the scintillator 1, and the reinforcement body 45 is disposed between the portion 22a and the portion 22b, the surfaces 11d and 11f are polished. FIG. 7 is a side view illustrating the radiation detector RD1 before the surfaces 11d and 11f are polished. FIG. 8 is a side view illustrating the radiation detector RD1 after the surfaces 11d and 11f are polished. As illustrated in FIGS. 7 and 8, in the present embodiment, the surface 11d is polished such that the semiconductor substrate 11a is thinned, and the surface 11f is polished such that the semiconductor substrate 11b is thinned.

The surfaces 11d and 11f are mechanically polished, for example. The surfaces 11d and 11f are mechanically polished by, for example, a grinding method, a lapping method, or a dry polishing method with a polishing foil. The surfaces 11d and 11f may be mechanochemically polished. The surfaces 11d and 11f are chemically polished, for example, by wet polishing with a CMP slurry. In the configuration in which the surfaces 11d and 11f include polished surfaces, the thicknesses of the semiconductor substrates 11a and 11b are, for example, 10 to 200 µm. Surface roughness of the polished surfaces is, for example, 0.001 to 200 µm. In this specification, surface roughness of a surface is represented by a maximum height (Rz). The maximum height (Rz) is defined in JIS B 0601: 2001 (ISO 4287: 1997). Before the surfaces 11d and 11f are polished, the thicknesses of the semiconductor substrates 11a and 11b are, for example, 250 to 1,000 µm.

As illustrated in FIGS. 1 and 6, the radiation detector RD1 includes, for example, a cover body 47a. The cover body 47a is disposed such that the semiconductor substrate 11a is positioned between the cover body 47a and the scintillator 1. In the present embodiment, the cover body 47a is disposed on the surface 11d. The cover body 47a is disposed on at least a part of the surface 11d. The cover body 47a may be disposed on the entire surface 11d. Therefore, the cover body 47a may be disposed only in a region of the surface 11d corresponding to the portion 21a, or may be disposed in the entire region of the surface 11d corresponding to the portion 21a and the portion 22a. FIGS. 1 and 6 illustrate an example in which the cover body 47a is disposed in the entire region of the surface 11d corresponding to the portion 21a and the portion 22a. The radiation detector RD1 does not need to include the cover body 47a.

As illustrated in FIGS. 2 and 6, the radiation detector RD1 includes, for example, a cover body 47b. The cover body 47b is disposed such that the semiconductor substrate 11b is positioned between the cover body 47b and the scintillator 1. In the present embodiment, the cover body 47b is disposed on the surface 11f. The cover body 47b is disposed on at least a part of the surface 11f. The cover body 47b may be disposed on the entire surface 11f. Therefore, the cover body 47b may be disposed only in a region of the surface 11f corresponding to the portion 21b, or may be disposed in the entire region of the surface 11f corresponding to the portion 21b and the portion 22b. FIGS. 2 and 6 illustrate an example in which the cover body 47b is disposed in the entire region of the surface 11f corresponding to the portion 21b and the portion 22b. The radiation detector RD1 does not need to include the cover body 47b. For example, when the cover body 47a constitutes the first cover body, the cover body 47b constitutes the second cover body.

Each of the cover bodies 47a and 47b includes, for example, a light reflector 48. The light reflector 48 includes, for example, a film. The film is made of metal, for example. Examples of the metal include Al, Ag, Ti, Pt, Ni, or Au. The light reflector 48 includes, for example, a metallic thin film. The light reflector 48 may include a multilayer optical film or a Teflon (registered trademark) film. The light reflector 48 is formed by, for example, a plating method, a vapor deposition method, or a sputtering method. A thickness of the light reflector 48 is, for example, 0.05 to 100 µm.

The cover bodies 47a and 47b include, for example, an electrical insulator 49. The electrical insulator 49 includes, for example, a film. The film includes, for example, an electrical insulating material. Examples of the electrical insulating material include a silicon compound, an epoxy resin, a silicone resin, an acrylic resin, a polyimide resin, a phenol resin, or a para-xylylene-based polymer. The electrical insulator 49 includes, for example, an electrical insulating thin film. Examples of the silicon compound include SiO₂ or SiN. Examples of the polymer include a para-xylylene-based polymer. The electrical insulator 49 is formed by, for example, a chemical vapor deposition (CVD) method, a thermal oxidation method, a sputtering method, a vapor deposition method, or a potting method. The electrical insulator 49 included in the cover body 47a may be formed by, for example, winding an electrical insulation film around the semiconductor substrate 11a disposed on the scintillator 1. The electrical insulator 49 included in the cover body 47b may be formed by, for example, winding an electrical insulation film around the semiconductor substrate 11b disposed on the scintillator 1. A thickness of the electrical insulator 49 is, for example, 0.05 to 100 µm.

Each of the cover bodies 47a and 47b includes, for example, the light reflector 48 and the electrical insulator 49. Each of the cover bodies 47a and 47b has, for example, a two-layer structure including the light reflector 48 and the electrical insulator 49. In a configuration in which the cover bodies 47a and 47b have the two-layer structure, the light reflector 48 may be disposed between the semiconductor substrate 11a and the electrical insulator 49, and the electrical insulator 49 may be disposed between the semiconductor substrate 11a and the light reflector 48. The light reflector 48 may be disposed between the semiconductor substrate 11b and the electrical insulator 49, and the electrical insulator 49 may be disposed between the semiconductor substrate 11b and the light reflector 48. In the present embodiment, each of the cover bodies 47a and 47b includes at least one of the light reflector 48 and the electrical insulator 49. The cover bodies 47a and 47b have, for example, a single-layer structure including only one of the light reflector 48 and the electrical insulator 49. The cover bodies 47a and 47b may have, for example, characteristics of a light reflector and characteristics of an electrical insulator. FIG. 6 illustrates an example in which the electrical insulators 49 are disposed between the semiconductor substrate 11a and the light reflector 48 and between the semiconductor substrate 11b and the light reflector 48.

The cover body 47a is disposed on the surface 11d, for example. The cover body 47a is disposed, for example, on the entire surface 11d and on a side surface 11g. The side surface 11g couples the surface 11c and the surface 11d to each other in the second direction D2, for example. The side surface 11g constitutes, for example, an outer circumferential edge of the cover body 47a when viewed in the second direction D2. The light reflector 48 may be disposed on the entire surface 11d, and the electrical insulator 49 may be disposed on the side surface 11g and on the light reflector 48 disposed on the surface 11d. The cover body 47b is disposed on the surface 11f, for example. The cover body 47b is disposed, for example, on the entire surface 11f and on a side surface 11h. The side surface 11h couples the surface 11e and the surface 11f to each other in the second direction D2. The side surface 11h constitutes, for example, an outer circumferential edge of the cover body 47b when viewed in the second direction D2. The light reflector 48 may be disposed on the entire surface 11f, and the electrical insulator 49 may be disposed on the side surface 11h and on the light reflector 48 disposed on the surface 11f.

In the present embodiment, in a configuration in which a potential of the anode or the cathode of each of the avalanche photodiodes 12 at the surface 11d is the ground potential, the electrical insulator 49 does not need to be disposed on the surface 11d. In a configuration in which a potential of the anode or the cathode of each of the avalanche photodiodes 12 at the surface 11d is not the ground potential, the electrical insulator 49 may be disposed on the surface 11d. In a configuration in which a potential of the anode or the cathode of each of the avalanche photodiodes 12 at the surface 11f is the ground potential, the electrical insulator 49 does not need to be disposed on the surface 11f. In a configuration in which a potential of the anode or the cathode of each of the avalanche photodiodes 12 at the surface 11f is not the ground potential, the electrical insulator 49 may be disposed on the surface 11f.

As illustrated in FIGS. 9 and 10, the radiation detector RD1 includes, for example, a base 40a and a base 40b. The base 40a includes a surface 40c and a surface 40d opposing each other in the second direction D2. The base 40a is disposed such that the semiconductor substrate 11a is positioned between the surface 40c and the scintillator 1. Therefore, at least a part of the wiring member 30a and the scintillator 1 are disposed in front of the same surface of the base 40a, for example. The base 40b includes a surface 40e and a surface 40f opposing each other in the second direction D2. The base 40b is disposed such that the semiconductor substrate 11b is positioned between the surface 40e and the scintillator 1. Therefore, at least a part of the wiring member 30b and the scintillator 1 are disposed in front of the same surface of the base 40b, for example. The base 40b has, for example, the same configuration and the same function as the base 40a. For example, when the base 40a constitutes a first base, the base 40b constitutes a second base. For example, when the surface 40c constitutes a fifth surface, the surface 40d constitutes a sixth surface. For example, when the surface 40e constitutes a seventh surface, the surface 40f constitutes an eighth surface.

The base 40a includes a portion 51a and a portion 52a. The portion 51a is covered with the semiconductor substrate 11a. The portion 52a is exposed from the semiconductor substrate 11a. The portion 51a and the portion 52a are disposed in the first direction D1. The base 40b includes a portion 51b and a portion 52b. The portion 51b is covered with the semiconductor substrate 11b. The portion 52b is exposed from the semiconductor substrate 11b. The portion 51b and the portion 52b are disposed in the first direction D1. For example, when the portion 51a constitutes a fifth portion, the portion 52a constitutes a sixth portion. For example, when the portion 51b constitutes a seventh portion, the portion 52b constitutes an eighth portion.

The radiation detector RD1 includes, for example, a terminal 41, a terminal 42, a wire 43, and a wire 44. On the base 40a, the terminal 41 and the terminal 42 are disposed on the surface 40c. The terminal 41 and the terminal 42 are disposed, for example, on the same side as the scintillator 1 relative to the semiconductor substrate 11a. That is, the terminal 41 and the scintillator 1 are disposed in front of the same surface of the corresponding base 40a. The terminal 42 and the scintillator 1 are disposed in front of the same surface of the corresponding base 40a. The terminal 41 disposed on the base 40a is positioned on the portion 52a and is electrically connected to the electrode 17 included in the semiconductor photodetector 10a through the wire 43. The terminal 42 disposed on the base 40a is positioned on the portion 52a and is electrically connected to the electrode 18 included in the semiconductor photodetector 10a through the wire 44.

The wires 43 and 44 are covered and protected with, for example, the resin of the reinforcement body 45. The wiring member 30a is electrically connected to the electrode 17 and the electrode 18 included in the semiconductor photodetector 10a via corresponding conductive bump 46. On the base 40a, for example, when the terminal 41 constitutes a first terminal, the terminal 42 constitutes a second terminal. On the base 40a, for example, when the wire 43 constitutes a first wire, the wire 44 constitutes a second wire. The wires 43 and 44 may be protected with the block of reinforcement body 45, for example.

On the base 40b, the terminal 41 and the terminal 42 are disposed on the surface 40e. The terminal 41 and the terminal 42 are disposed, for example, on the same side as the scintillator 1 relative to the semiconductor substrate 11b. That is, the terminal 41 and the scintillator 1 are disposed in front of the same surface of the corresponding base 40b. The terminal 42 and the scintillator 1 are disposed in front of the same surface of the corresponding base 40b. The terminal 41 disposed on the base 40b is positioned on the portion 52b and is electrically connected to the electrode 17 included in the semiconductor photodetector 10b through the wire 43. The terminal 42 disposed on the base 40b is positioned on the portion 52b and is electrically connected to the electrode 18 included in the semiconductor photodetector 10b through the wire 44.

The wires 43 and 44 are covered and protected with, for example, the resin of the reinforcement body 45. The wiring member 30b is electrically connected to the electrode 17 and the electrode 18 included in the semiconductor photodetector 10b via corresponding conductive bump 46. On the base 40b, for example, when the terminal 41 constitutes a third terminal, the terminal 42 constitutes a fourth terminal. On the base 40b, for example, when the wire 43 constitutes a third wire, the wire 44 constitutes a fourth wire. In the present embodiment, the terminal 41 of the base 40b has the same configuration and function as the terminal 41 of the base 40a, and the terminal 42 of the base 40b has the same configuration and function as the terminal 42 of the base 40a. The radiation detector RD1 does not need to include one of the base 40a and the base 40b, and does not need to include the base 40a and the base 40b. The wires 43 and 44 may be protected with the block of reinforcement body 45, for example.

The radiation detector RD1 includes, for example, resins 55. The resins 55 cover the wire 43 and the wire 44 individually or cover both the wire 43 and the wire 44. In the configuration in which the resins 55 cover the wire 43 and the wire 44 individually, the resins 55 may be separated from each other or connected to each other. In this specification, that the "resin 55 covers the wire 43" also means that the resin covers a connection position between the terminal 41 and the wire 43 and a connection position between the electrode 17 and the wire 43. In addition, that the "resin 55 covers the wire 44" also means that the resin covers both a connection position between the terminal 42 and the wire 44 and a connection position between the electrode 18 and the wire 44. In the present embodiment, the resin of the reinforcement body 45 is disposed between the portion 22a and the portion 22b, for example, to cover the resins 55. The radiation detector RD1 does not need to include the resins 55. FIGS. 9 and 10 illustrate an example in which the radiation detector RD1 includes the resins 55. The block of reinforcement body 45 may be disposed between the portions 22a and 22b to cover the resins 55.

The configuration in which the radiation detector RD1 includes the base 40a includes, for example, the cover body 47a. The cover body 47a is disposed on the surface 40d. In this configuration, the scintillator 1, the semiconductor substrate 11a, the base 40a, and the cover body 47a are disposed in the order of the scintillator 1, the semiconductor substrate 11a, the base 40a, and the cover body 47a. Therefore, the cover body 47a is disposed such that the semiconductor substrate 11a and the base 40a are positioned between the cover body 47a and the scintillator 1. The configuration in which the radiation detector RD1 includes the base 40b includes, for example, the cover body 47b. The cover body 47b is disposed on the surface 40f. In this configuration, the scintillator 1, the semiconductor substrate 11b, the base 40b, and the cover body 47b are disposed in the order of the scintillator 1, the semiconductor substrate 11b, the base 40b, and the cover body 47b. Therefore, the cover body 47b is disposed such that the semiconductor substrate 11b and the base 40b are positioned between the cover body 47b and the scintillator 1. The radiation detector RD1 does not need to include at least one of the cover body 47a and the cover body 47b.

As illustrated in FIG. 11, the scintillation lights include, for example, a light L1 and a light L2 incident on the side surface 1c from a scintillation light generation point GP1. The light L1 is incident substantially perpendicularly on the side surface 1c. The light L2 is incident on the side surface 1c at an incidence angle EA1. An incidence angle of the light L1 and the incidence angle EA1 of the light L2 are smaller than the critical angle on the side surface 1c. The lights L1 and L2 are incident on the side surface 1c and are emitted from the side surface 1c. The lights L1 and L2 are detected by the semiconductor photodetector 10a disposed on the side surface 1c. The scintillation lights include, for example, a light L3 and a light L4 incident on the side surface 1d from the generation point GP1. The light L3 is incident substantially perpendicularly on the side surface 1d, and the light L4 is incident on the side surface 1d at an incidence angle EA2. An incidence angle of the light L3 and the incidence angle EA2 of the light L4 are smaller than the critical angle on the side surface 1d. The lights L3 and L4 are incident on the side surface 1d and are emitted from the side surface 1d. The lights L3 and L4 are detected by the semiconductor photodetector 10b disposed on the side surface 1d.

In the present embodiment, the semiconductor photodetectors 10a and 10b adhere to the scintillator 1 with adhesives having the same refractive index. Therefore, the critical angles on the side surfaces 1c and 1d are equal to each other. The refractive index of the scintillator 1 is, for example, 1.8. The refractive index of the adhesives is, for example, 1.5. The critical angles of the scintillation lights on the side surfaces 1c and 1d are, for example, about 56.4 degrees. FIG. 11 illustrates paths of some scintillation lights when the scintillator 1 is viewed in the third direction D3. The semiconductor photodetector 10a detects the light L2 in a region R1 in which the incidence angle EA1 of the light L2 on the side surface 1c is smaller than the critical angle on the side surface 1c. The semiconductor photodetector 10b detects the light L4 in a region R2 in which the incidence angle EA2 of the light L4 on the side surface 1d is smaller than the critical angle on the side surface 1d.

As illustrated in FIGS. 1, 2, 6, and 11, the radiation detector RD1 includes, for example, a light reflector 56. For example, the light reflector 56 is disposed on at least one of the end surfaces 1a and 1b and the side surfaces 1e and 1f of the scintillator 1. In the present embodiment, the light reflectors 56 are disposed on all of the end surfaces 1a and 1b and the side surfaces 1e and 1f. The light reflector 56 reflects a scintillation light such that a scintillation light incident on the end surfaces 1a and 1b and the side surfaces 1e and 1f is not emitted outside the scintillator 1. A material and a thickness of the light reflector 56 are, for example, the same as the material and thickness of the light reflector 48. For example, the light reflector 56 is formed by the same method as the light reflector 48. The radiation detector RD1 does not need to include the light reflector 56.

As described above, the radiation detector RD1 includes: the scintillator 1 including a pair of end surfaces 1a and 1b opposing each other in the first direction D1, and the side surface 1c and the side surface 1d opposing each other in the second direction D2 intersecting the first direction D1 and coupling the pair of end surfaces 1a and 1b, the scintillator 1 having the rectangular shape when viewed in the first direction D1; the semiconductor photodetector 10a including the semiconductor substrate 11a disposed to oppose the side surface 1c; the semiconductor photodetector 10b including the semiconductor substrate 11b disposed to oppose the side surface 1d; the wiring member 30a electrically connected to the semiconductor photodetector 10a; and the wiring member 30b electrically connected to the semiconductor photodetector 10b. The length of the scintillator 1 in the first direction D1 is longer than the length of the scintillator 1 in the second direction D2 and the length of the scintillator 1 in the third direction D3 parallel to the side surface 1c. A length of the side surface 1c in the first direction D1 is longer than a width of the side surface 1c in the third direction D3. A length of the side surface 1d in the first direction D1 is longer than a width of the side surface 1d in the third direction D3. The semiconductor substrate 11a includes the portion 21a covered with the side surface 1c, and the portion 22a disposed with the portion 21a in the first direction D1 and exposed from the side surface 1c. The semiconductor substrate 11b includes the portion 21b covered with the side surface 1d, and the portion 22b disposed with the portion 21b in the first direction D1 and exposed from the side surface 1d. Each of the semiconductor photodetector 10a and the semiconductor photodetector 10b includes the photodetection region 23 including the plurality of avalanche photodiodes 12 arranged to operate in Geiger mode, and the plurality of quenching resistors 13 electrically connected in series with one of the anode or the cathode of the corresponding avalanche photodiode 12 of the plurality of avalanche photodiodes 12. The semiconductor photodetector 10a includes the electrode 17 to which the plurality of quenching resistors 13 included in the semiconductor photodetector 10a are connected in parallel, and the electrode 18 to which the other of the anode or the cathode of each of the plurality of avalanche photodiodes 12 included in the semiconductor photodetector 10a is connected in parallel. The semiconductor photodetector 10b includes the electrode 17 to which the plurality of quenching resistors 13 included in the semiconductor photodetector 10b are connected in parallel, and the electrode 18 to which the other of the anode or the cathode of each of the plurality of avalanche photodiodes 12 included in the semiconductor photodetector 10b is connected in parallel. The photodetection region 23 included in the semiconductor photodetector 10a is disposed in the portion 21a. The electrode 17 and the electrode 18 included in the semiconductor photodetector 10a are disposed in the portion 22a. The photodetection region 23 included in the semiconductor photodetector 10b is disposed in the portion 21b. The electrode 17 and the electrode 18 included in the semiconductor photodetector 10b are disposed in the portion 22b. The wiring member 30a includes the conductor 31 electrically connected to the electrode 17 included in the semiconductor photodetector 10a, and the conductor 32 connected to the electrode 18 included in the semiconductor photodetector 10a. The wiring member 30b includes the conductor 31 electrically connected to the electrode 17 included in the semiconductor photodetector 10b, and the conductor 32 connected to the electrode 18 included in the semiconductor photodetector 10b.

The radiation detector RD1 includes the scintillator 1 that is elongated in the first direction D1, the semiconductor substrate 11a disposed on the side surface 1c of the scintillator 1, and the semiconductor substrate 11b disposed on the side surface 1d of the scintillator 1. The semiconductor photodetector 10a detects the scintillation light incident on the side surface 1c. The semiconductor photodetector 10b detects the scintillation light incident on the side surface 1d. The length of the scintillator 1 in the second direction D2 is longer than the length of the scintillator 1 in the first direction D1. Therefore, a distance from the scintillation light generation point GP1 to each of the side surface 1c and the side surface 1d is short. An arrival time of a scintillation light to each of the semiconductor photodetector 10a and the semiconductor photodetector 10b is short, and the radiation detector RD1 achieves high time resolution. The radiation detector RD1 includes the semiconductor photodetectors 10a and 10b. Therefore, the radiation detector RD1 achieves high detection sensitivity as compared with a radiation detector including a single semiconductor photodetector disposed on one side surface of the scintillator 1.

In the radiation detector RD1, when viewed in the second direction D2, the photodetection region 23 included in the semiconductor substrate 11a has the outline shape corresponding to the outline shape of the side surface 1c. When viewed in the second direction D2, the photodetection region 23 included in the semiconductor substrate 11b has the outline shape corresponding to the outline shape of the side surface 1d.

In a configuration in which the photodetection region 23 included in the semiconductor substrate 11a has the outline shape corresponding to the outline shape of the side surface 1c, the photodetection region 23 tends not to be disposed at a position on the semiconductor substrate 11a where no scintillation lights can be received. Therefore, increase in dark count and capacitance in the photodetection region 23 included in the semiconductor substrate 11a is curbed. In a configuration in which the photodetection region 23 included in the semiconductor substrate 11b has the outline shape corresponding to the outline shape of the side surface 1d, the photodetection region 23 tends not to be disposed at a position on the semiconductor substrate 11b where no scintillation lights can be received. Therefore, increase in dark count and capacitance in the photodetection region included in the semiconductor substrate 11b is curbed. These configurations reduce detection errors of scintillation lights. As a result, the radiation detector RD1 reliably improves the time resolution and the detection sensitivity of the semiconductor photodetectors 10a and 10b.

The radiation detector RD1 includes the reinforcement body 45 disposed between the portions 22a and 22b. The reinforcement body 45 covers the portion 22a and the portion 22b, and couples the portion 22a and the portion 22b.

In this configuration, the reinforcement body 45 disposed between the portions 22a and 22b improves the mechanical strength of the portions 22a and 22b. The reinforcement body 45 protects the wiring member 30a positioned in the portion 22a and the wiring member 30b positioned in the portion 22b.

In the radiation detector RD1, the semiconductor substrate 11a includes the surface 11c opposing the scintillator 1 in the second direction D2 and the surface 11d opposing the surface 11c in the second direction D2. The semiconductor substrate 11b includes the surface 11e opposing the scintillator 1 in the second direction D2 and the surface 11f opposing the surface 11e in the second direction D2. The surface 11d and the surface 11f include polished surfaces.

In a configuration in which the surface 11d includes a polished surface, the semiconductor substrate 11a can be thinned by polishing the surface 11d. In a configuration in which the surface 11f includes a polished surface, the semiconductor substrate 11b can be thinned by polishing the surface 11f. A size of the radiation detector RD1 can be reduced in a thickness direction of the semiconductor substrate 11a. A size of the radiation detector RD1 can be reduced in a thickness direction of the semiconductor substrate 11b.

The radiation detector RD1 includes: the base 40a including the surface 40c and the surface 40d opposing each other in the second direction D2 and be disposed such that the semiconductor substrate 11a is positioned between the surface 40d and the scintillator 1; the base 40b including the surface 40e and the surface 40f opposing each other in the second direction D2 and be disposed such that the semiconductor substrate 11b is positioned between the surface 40e and the scintillator 1; the terminals 41 and 42 disposed on the surface 40c; the terminals 41 and 42 disposed on the surface 40e; the wire 43 electrically coupling the terminal 41 disposed on the surface 40c and the electrode 17 disposed in the portion 22a; the wire 44 electrically connecting the terminal 42 disposed on the surface 40c and the electrode 18 disposed in the portion 22a; the wire 43 electrically connecting the terminal 41 disposed on the surface 40e and the electrode 17 disposed in the portion 22b; and the wire 44 electrically connecting the terminal 42 disposed on the surface 40e and the electrode 18 disposed in the portion 22b. The base 40a includes the portion 51a covered with the semiconductor substrate 11a, and the portion 52a disposed with the portion 51a in the first direction D1 and exposed from the semiconductor substrate 11a. The base 40b includes the portion 51b covered with the semiconductor substrate 11b, and the portion 52b disposed with the portion 51b in the first direction D1 and exposed from the semiconductor substrate 11b. The terminal 41 and the terminal 42 disposed on the surface 40c are positioned on the portion 52a. The terminal 41 and the terminal 42 disposed on the surface 40e are positioned on the portion 52b.

A configuration in which the bases 40a and 40b are provided improves the mechanical strength of the radiation detector RD1. Therefore, this configuration reliably realizes the radiation detector RD1 having high mechanical strength.

The radiation detector RD1 includes the cover body 47a disposed such that the semiconductor substrate 11a is positioned between the cover body 47a and the scintillator 1, and the cover body 47b disposed such that the semiconductor substrate 11b is positioned between the cover body 47b and the scintillator 1. Each of the cover body 47a and the cover body 47b includes at least one of the light reflector 48 and the electrical insulator 49.

For example, a configuration in which each of the cover body 47a and the cover body 47b includes the light reflector 48 improves light reflection characteristics of the scintillation light. For example, a configuration in which each of the cover body 47a and the cover body 47b includes the electrical insulator 49 improves electrical insulation between the radiation detectors RD1 adjacent to each other.

In the radiation detector RD1, the wiring member 30a is disposed on the same side as the scintillator 1 relative to the semiconductor substrate 11a. The wiring member 30b is disposed on the same side as the scintillator 1 relative to the semiconductor substrate 11b.

In a configuration in which the wiring member 30a is disposed on the same side as the scintillator 1 relative to the semiconductor substrate 11a, there is no need to provide a substrate for connecting the wiring member 30a to the electrodes 17 and 18 included in the semiconductor photodetector 10a through die bonding, for example. In a configuration in which the wiring member 30b is disposed on the same side as the scintillator 1 relative to the semiconductor substrate 11b, there is no need to provide a substrate for connecting the wiring member 30b and the electrodes 17 and 18 included in the semiconductor photodetector 10b through die bonding, for example. Therefore, this configuration more reliably simplifies the configuration of the radiation detector RD1.

In the radiation detector RD 1, at least a part of the wiring member 30a and the scintillator 1 are disposed in front of the same surface of the semiconductor substrate 11a. That is, at least a part of the wiring member 30b and the scintillator 1 are disposed in front of the same surface of the semiconductor substrate 11b, for example.

In the configuration in which at least a part of the wiring member 30a and the scintillator 1 are disposed in front of the same surface of the semiconductor substrate 11a, the space efficiency of the radiation detector RD1 is improved as compared with a configuration in which at least a part of the wiring member 30a and the scintillator 1 are disposed in front of corresponding different surface of the semiconductor substrates 11a. In the configuration in which at least a part of the wiring member 30b and the scintillator 1 are disposed in front of the same surface of the semiconductor substrate 11b, the space efficiency of the radiation detector RD1 is improved as compared with a configuration in which at least a part of the wiring member 30b and the scintillator 1 are disposed in front of corresponding different surface of the semiconductor substrates 11b.

In the radiation detector RD1, at least a part of the wiring member 30a and the scintillator 1 are disposed in front of the same surface of the base 40a. At least a part of the wiring member 30b and the scintillator 1 are disposed in front of the same surface of the base 40b, for example.

In the configuration in which at least a part of the wiring member 30a and the scintillator 1 are disposed in front of the same surface of the base 40a, the wiring member 30a is easily connected to the electrodes 17 and 18 included in the semiconductor photodetector 10a through die bonding. In the configuration in which at least a part of the wiring member 30b and the scintillator 1 are disposed in front of the same surface of the base 40b, the wiring member 30b is easily connected to the electrodes 17 and 18 included in the semiconductor photodetector 10b through die bonding.

In the radiation detector RD1, the wiring member 30a and the wiring member 30b and the semiconductor substrate 11a and the semiconductor substrate 11b have flexibility. The flexibility of the wiring member 30a is higher than the flexibility of the semiconductor substrate 11a. The flexibility of the wiring member 30b is higher than the flexibility of the semiconductor substrate 11b.

In a configuration in which the flexibility of the wiring member 30a is higher than the flexibility of the semiconductor substrate 11a, vibration of the wiring member 30a tends not to be transmitted to the semiconductor substrate 11a. The force from the wiring member 30a tends not to be applied to the semiconductor substrate 11a, and the semiconductor substrate 11a tends not to be physically damaged. In a configuration in which the flexibility of the wiring member 30b is higher than the flexibility of the semiconductor substrate 11b, vibration of the wiring member 30b tends not to be transmitted to the semiconductor substrate 11b. The force from the wiring member 30b tends not to be applied to the semiconductor substrate 11b, and the semiconductor substrate 11b tends not to be physically damaged. Therefore, this configuration reliably maintains the mechanical strength of the radiation detector RD1.

### (Second Embodiment)

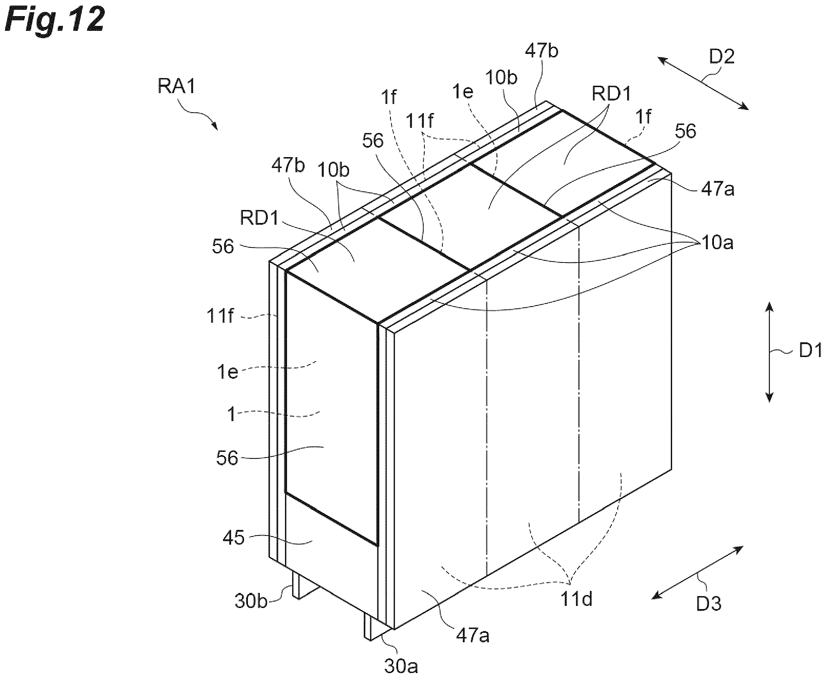

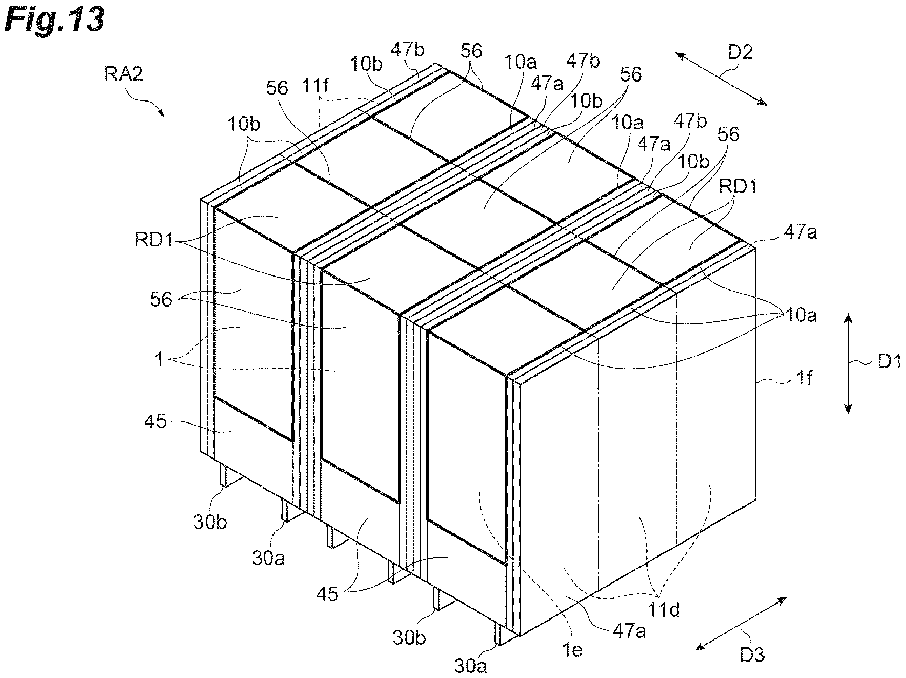

Configurations of radiation detector arrays RA1 and RA2 according to a second embodiment will be described with reference to FIGS. 12 and 13. FIG. 12 is a perspective view illustrating the radiation detector array RA1 according to the second embodiment. FIG. 13 is a perspective view illustrating the radiation detector array RA2 according to the second embodiment.

As illustrated in FIG. 12, the radiation detector array RA1 has a configuration in which the plurality of radiation detectors RD1 are disposed one-dimensionally, for example. The plurality of radiation detectors RD1 are all disposed in the third direction D3, for example. In an example illustrated in FIG. 12, three radiation detectors RD1 are disposed in the third direction D3. Of the plurality of radiation detectors RD1, any two radiation detectors RD1 adjacent to each other are disposed such that the side surfaces 1e and 1f of the scintillator 1 included in one radiation detector RD1 and the side surfaces 1e and 1f of the scintillator 1 included in the other radiation detector RD1 oppose each other. Therefore, any two radiation detectors RD1 adjacent to each other in the third direction D3 are disposed such that the side surface 1e of the scintillator 1 included in one radiation detector RD1 and the side surface 1f of the scintillator 1 included in the other radiation detector RD1 oppose each other. Any two radiation detectors RD1 adjacent to each other in the third direction D3 are disposed such that the side surface 1f of the scintillator 1 included in one radiation detector RD1 and the side surface 1e of the scintillator 1 included in the other radiation detector RD1 oppose each other.

The semiconductor photodetector 10a included in the one radiation detector RD1 and the semiconductor photodetector 10a included in the other radiation detector RD1 are one-dimensionally disposed, for example. In the present embodiment, the semiconductor photodetector 10a included in the one radiation detector RD1 and the semiconductor photodetector 10a included in the other radiation detector RD1 are disposed in the third direction D3, for example. The semiconductor photodetector 10b included in the one radiation detector RD1 and the semiconductor photodetector 10b included in the other radiation detector RD1 are one-dimensionally disposed, for example. In the present embodiment, the semiconductor photodetector 10b included in the one radiation detector RD1 and the semiconductor photodetector 10b included in the other radiation detector RD1 are disposed in the third direction D3, for example.

The semiconductor photodetector 10a included in the one radiation detector RD1 and the semiconductor photodetector 10a included in the other radiation detector RD1 are one-dimensionally disposed, and are integrally formed to each other, for example. That is, the semiconductor photodetectors 10a included in the plurality of radiation detectors RD1 are integrally formed. The semiconductor photodetectors 10a are disposed in the third direction D3, for example. The semiconductor photodetector 10b included in the one radiation detector RD1 and the semiconductor photodetector 10b included in the other radiation detector RD1 are one-dimensionally disposed, and are integrally formed to each other, for example. That is, the semiconductor photodetectors 10b included in the plurality of radiation detectors RD1 are integrally formed. The semiconductor photodetectors 10b are disposed, for example, in the third direction D3, for example. That is, the semiconductor photodetectors 10a included in the plurality of radiation detectors RD1 does not need to be integrally formed. That is, the semiconductor photodetectors 10b included in the plurality of radiation detectors RD1 does not need to be integrally formed.

Each of the radiation detectors RD1 includes, for example, the cover bodies 47a and 47b and the light reflector 56. When each of the radiation detectors RD1 includes the light reflector 56, the side surface 1e of the scintillator 1 included in the one radiation detector RD1 and the side surface 1f of the scintillator 1 included in the other radiation detector RD1 oppose each other in the third direction D3 such that the light reflector 56 is positioned between the side surface 1e and the side surface 1f. Therefore, for example, the light reflector 56 disposed on the side surface 1e of the scintillator 1 included in one radiation detector RD 1 and the light reflector 56 disposed on the side surface 1f of the scintillator 1 included in the other radiation detector RD1 are disposed between the side surface 1e in the one radiation detector RD1 and the side surface 1f in the other radiation detector RD1. In the present embodiment, for example, one light reflector 56 may be disposed between the side surface 1e of the scintillator 1 included in one radiation detector RD1 and the side surface 1f of the scintillator 1 included in the other radiation detector RD1. In the configuration in which one light reflector 56 is disposed, for example, the light reflector 56 is disposed on the side surface 1e in the one radiation detector RD1, and the light reflector 56 is not disposed on the side surface 1f in the other radiation detector RD1. Each of the radiation detectors RD1 does not need to include at least one of the cover bodies 47a and 47b and the light reflector 56.

As illustrated in FIG. 13, the radiation detector array RA2 has a configuration in which the plurality of radiation detectors RD1 according to the first embodiment are two-dimensionally disposed in the matrix, for example. Of the plurality of radiation detectors RD1, the plurality of radiation detectors RD1 disposed in a row direction constitute, for example, the radiation detector array RA1 illustrated in FIG. 12. In the radiation detector array RA2, for example, the radiation detector arrays RA1 are disposed in a column direction. In the present embodiment, the column direction is the second direction D2, and the row direction is the third direction D3. Of the plurality of radiation detectors RD1, any two radiation detectors RD1 adjacent to each other in the column direction are disposed such that either the semiconductor photodetector 10a or the semiconductor photodetector 10b included in one radiation detector RD1 and either the semiconductor photodetector 10a or the semiconductor photodetector 10b included in the other radiation detector RD1 oppose each other in the column direction. Therefore, any two radiation detectors RD1 adjacent to each other in the column direction are disposed such that, for example, the semiconductor photodetector 10a included in the one radiation detector RD1 and the semiconductor photodetector 10a included in the other radiation detector RD1 oppose each other in the column direction. Any two radiation detectors RD1 adjacent to each other in the column direction are disposed such that, for example, the semiconductor photodetector 10a included in the one radiation detector RD1 and the semiconductor photodetector 10b included in the other radiation detector RD1 oppose each other in the column direction. Any two radiation detectors RD1 adjacent to each other in the column direction are disposed such that, for example, the semiconductor photodetector 10b included in the one radiation detector RD1 and the semiconductor photodetector 10a included in the other radiation detector RD1 oppose each other in the column direction. Any two radiation detectors RD1 adjacent to each other in the column direction are disposed such that, for example, the semiconductor photodetector 10b included in the one radiation detector RD1 and the semiconductor photodetector 10b included in the other radiation detector RD1 oppose each other in the column direction.

When each of the radiation detectors RD1 includes the cover bodies 47a and 47b, in any two radiation detectors RD1 adjacent to each other in the column direction, for example, the semiconductor photodetector 10a included in one radiation detector RD1 and the semiconductor photodetector 10b included in the other radiation detector RD1 oppose each other in the column direction such that the cover bodies 47a and 47b are positioned between the semiconductor photodetectors 10a and 10b. In any two radiation detectors RD1 adjacent to each other in the column direction, for example, the semiconductor photodetector 10b included in one radiation detector RD1 and the semiconductor photodetector 10a included in the other radiation detector RD1 oppose each other in the column direction such that the cover bodies 47b and 47a are positioned between the semiconductor photodetectors 10b and 10a. In the example illustrated in FIG. 13, three radiation detectors RD1 are disposed in the third direction D3, and three radiation detectors RD1 are disposed in the second direction D2. The radiation detector array RA2 includes, for example, a total of nine radiation detectors RD1. For example, the end surface 1a of one radiation detector RD1 is flush with the end surface 1a of another radiation detector RD1 adjacent thereto in the row direction or the column direction.

As described above, the radiation detector array RA1 according to the present embodiment includes the plurality of radiation detectors RD1 disposed one-dimensionally. Each of the plurality of radiation detectors RD1 is the radiation detector RD1 according to the first embodiment. The scintillator 1 includes the pair of side surfaces 1e and 1f that couples the pair of end surfaces 1a and 1b and couples the side surface 1c and the side surface 1d. Of the plurality of radiation detectors RD1, any two radiation detectors RD1 adjacent to each other are disposed such that the side surfaces 1e and 1f of the scintillator 1 included in one radiation detector RD1 and the side surfaces 1e and 1f of the scintillator 1 included in the other radiation detector RD1 oppose each other.

The radiation detector array RA1 according to the present embodiment realizes the radiation detector array in which the plurality of radiation detectors RD1 having high time resolution and high detection sensitivity are one-dimensionally disposed.

In the radiation detector array RA1, the semiconductor photodetectors 10a included in the plurality of radiation detectors RD1 are integrally formed. The semiconductor photodetectors 10b included in the plurality of radiation detectors RD1 are integrally formed.

A configuration in which the semiconductor photodetectors 10a are integrally formed and the semiconductor photodetectors 10b are integrally formed improves mechanical strength of the radiation detector array RA1 in which the plurality of radiation detectors RD1 are one-dimensionally disposed.

The radiation detector array RA2 according to the present embodiment includes the plurality of radiation detectors RD1 disposed two-dimensionally in a matrix. Of the plurality of radiation detectors RD1, the plurality of radiation detectors RD1 disposed in the row direction constitute, for example, the radiation detector array RA1 according to the present embodiment. Of the plurality of radiation detectors RD1, any two radiation detectors RD1 adjacent to each other in the column direction are disposed such that either the semiconductor photodetector 10a or the semiconductor photodetector 10b included in one radiation detector RD1 and either the semiconductor photodetector 10a or the semiconductor photodetector 10b included in the other radiation detector RD1 oppose each other in the column direction.

This configuration realizes the radiation detector array RA2 in which the radiation detectors RD1 having high time resolution and high detection sensitivity are two-dimensionally disposed in the matrix. In the present embodiment, when the radiation detectors RD1 include the light reflector 56, a scintillation light incident on the side surface 1e of the scintillator 1 included in one radiation detector RD1 tends not to be incident on the side surface 1f of the scintillator 1 included in another radiation detector RD1, for example.

### (Third Embodiment)

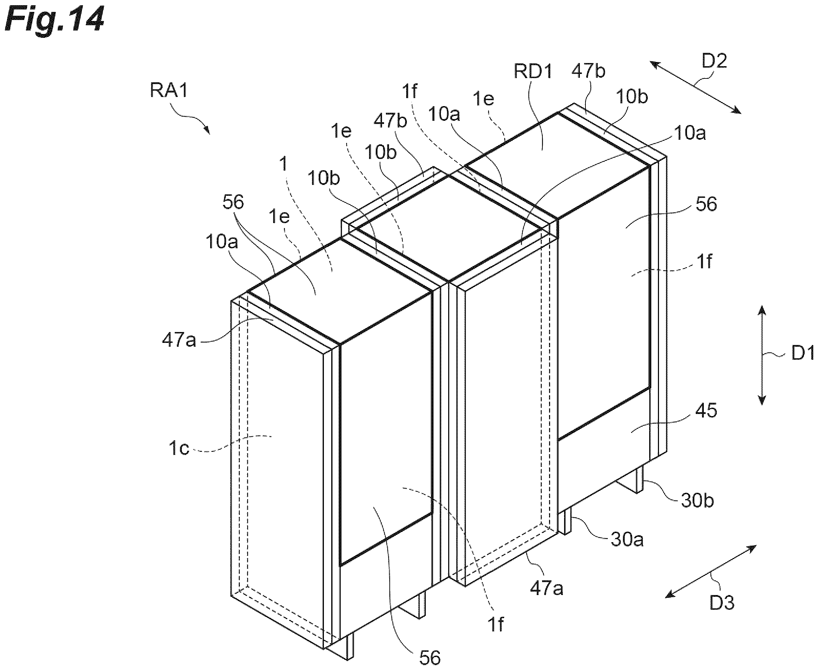

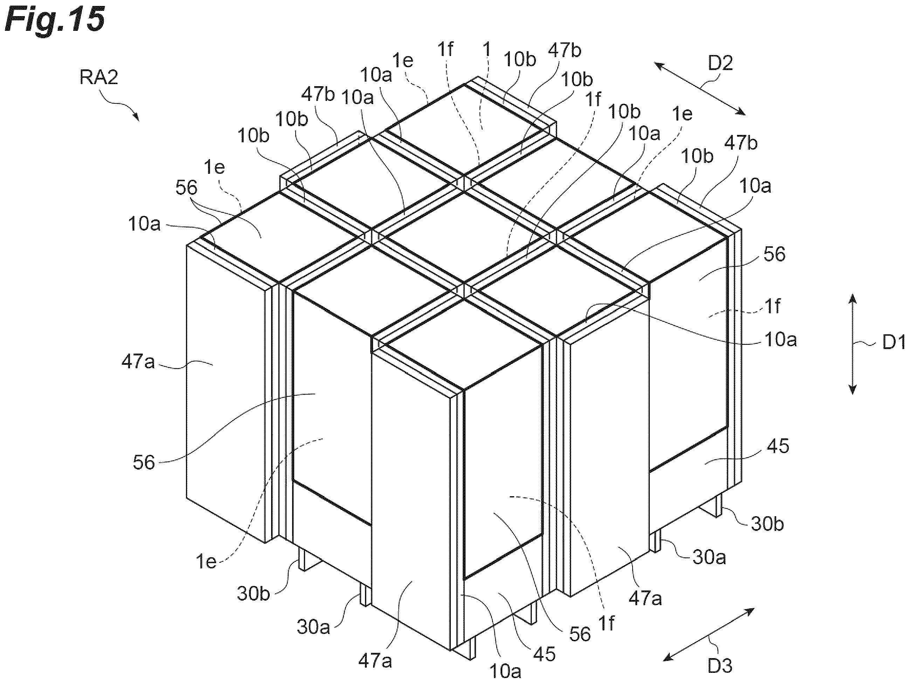

Configurations of radiation detector arrays RA1 and RA2 according to a third embodiment will be described with reference to FIGS. 14 and 15. FIG. 14 is a perspective view illustrating the radiation detector array RA1 according to the third embodiment. FIG. 15 is a perspective view illustrating the radiation detector array RA2 according to the third embodiment.

As illustrated in FIG. 14, the radiation detector array RA1 has a configuration in which the plurality of radiation detectors RD1 according to the first embodiment are disposed one-dimensionally, for example. The plurality of radiation detectors RD1 are all disposed in the third direction D3, for example. In an example illustrated in FIG. 14, three radiation detectors RD1 of the first embodiment are disposed in the third direction D3. Of the plurality of radiation detectors RD1, any two radiation detectors RD1 adjacent to each other are disposed such that the side surfaces 1e and 1f of the scintillator 1 included in one radiation detector RD 1 and either the semiconductor photodetector 10a or the semiconductor photodetector 10b included in the other radiation detector RD1 oppose each other. Therefore, any two radiation detectors RD1 adjacent to each other in the third direction D3 are disposed such that the side surface 1e of the scintillator 1 included in one radiation detector RD1 and the semiconductor photodetector 10b included in the other radiation detector RD1 oppose each other in the third direction D3. Any two radiation detectors RD1 adjacent to each other in the third direction D3 are disposed such that the side surface 1f of the scintillator 1 included in one radiation detector RD1 and the semiconductor photodetector 10a included in the other radiation detector RD1 oppose each other in the third direction D3.

Each of the radiation detectors RD1 includes, for example, the cover bodies 47a and 47b and the light reflector 56. In this case, for example, in any two radiation detectors RD1 adjacent to each other in the third direction D3, the side surface 1e of the scintillator 1 included in one radiation detector RD1 and the semiconductor photodetector 10b included in the other radiation detector RD1 oppose each other in the third direction D3 such that the cover body 47b and the light reflector 56 are positioned between the side surface 1e and the semiconductor photodetector 10b. For example, in any two radiation detectors RD1 adjacent to each other in the third direction D3, the side surface 1f of the scintillator 1 included in one radiation detector RD1 and the semiconductor photodetector 10a included in the other radiation detector RD1 oppose each other in the third direction D3 such that the cover body 47a and the light reflector 56 are positioned between the side surface 1f and the semiconductor photodetector 10a. Each of the radiation detectors RD1 does not need to include at least one of the cover bodies 47a and 47b and the light reflector 56.

As illustrated in FIG. 15, the radiation detector array RA2 has a configuration in which the plurality of radiation detectors RD1 according to the first embodiment are two-dimensionally disposed in the matrix, for example. Of the plurality of radiation detectors RD1, the plurality of radiation detectors RD1 disposed in the row direction all constitute, for example, the radiation detector array RA1 illustrated in FIG. 14. Therefore, in the radiation detector array RA2, the radiation detector arrays RA1 are disposed in the column direction. In the present embodiment, the column direction is the second direction D2, and the row direction is the third direction D3. Of the plurality of radiation detectors RD1, any two radiation detectors RD1 adjacent to each other in the column direction are disposed such that the side surfaces 1e and 1f of the scintillator 1 included in one radiation detector RD1 and either the semiconductor photodetector 10a or the semiconductor photodetector 10b included in the other radiation detector RD1 oppose each other in the column direction. An opposing direction of the side surfaces 1e and 1f of the scintillator 1 included in the one radiation detector RD1 and an opposing direction of the side surfaces 1e and 1f of the scintillator 1 included in the other radiation detector RD1 intersect each other, for example. Therefore, any two radiation detectors RD1 adjacent to each other in the column direction are disposed such that, for example, the side surface 1e of the scintillator 1 included in one radiation detector RD1 and the semiconductor photodetector 10a included in the other radiation detector RD1 oppose each other in the column direction. Any two radiation detectors RD1 adjacent to each other in the column direction are disposed such that, for example, the side surface 1f of the scintillator 1 included in one radiation detector RD1 and the semiconductor photodetector 10b included in the other radiation detector RD1 oppose each other in the column direction.

In the example illustrated in FIG. 15, three radiation detectors RD1 are disposed in the third direction D3, and three radiation detectors RD1 are disposed in the second direction D2. The radiation detector array RA2 includes, for example, a total of nine radiation detectors RD1. For example, the end surface 1a of one radiation detector RD1 is flush with the end surface 1a of another radiation detector RD1 adjacent thereto in the row direction or the column direction.

In the configuration in which each of the radiation detectors RD1 includes the cover bodies 47a and 47b and the light reflector 56, for example, the side surface 1e of the scintillator 1 included in one radiation detector RD1 and the semiconductor photodetector 10a included in another radiation detector RD1 oppose each other in the column direction such that the cover body 47a and the light reflector 56 are positioned between the side surface 1e and the semiconductor photodetector 10a. For example, the side surface 1f of the scintillator 1 included in one radiation detector RD1 and the semiconductor photodetector 10b included in another radiation detector RD1 oppose each other in the column direction such that the cover body 47b and the light reflector 56 are positioned between the side surface 1f and the semiconductor photodetector 10b.

As described above, the radiation detector array RA1 according to the present embodiment includes the plurality of radiation detectors RD1 disposed one-dimensionally. Each of the plurality of radiation detectors RD1 is the radiation detector RD1 according to the first embodiment. The scintillator 1 includes the pair of side surfaces 1e and 1f that couples the pair of end surfaces 1a and 1b and couples the side surface 1c and the side surface 1d. Of the plurality of radiation detectors RD1, any two radiation detectors RD1 adjacent to each other are disposed such that the side surfaces 1e and 1f of the scintillator 1 included in one radiation detector RD 1 and either the semiconductor photodetector 10a or the semiconductor photodetector 10b included in the other radiation detector RD1 oppose each other.

The radiation detector array RA1 according to the present embodiment realizes the radiation detector array in which the radiation detectors RD1 having high time resolution and high detection sensitivity are one-dimensionally disposed.

The radiation detector array RA2 according to the present embodiment includes the plurality of radiation detectors RD1 disposed two-dimensionally in the matrix. Of the plurality of radiation detectors RD1, the plurality of radiation detectors RD1 disposed in the row direction constitute, for example, the radiation detector array RA1 according to the present embodiment. Of the plurality of radiation detectors RD1, any two radiation detectors RD1 adjacent to each other in the column direction are disposed such that the side surfaces 1e and 1f of the scintillator 1 included in one radiation detector RD1 and either the semiconductor photodetector 10a or the semiconductor photodetector 10b included in the other radiation detector RD1 oppose each other in the column direction.

The configuration in which the plurality of radiation detectors RD1 are two-dimensionally disposed in the matrix realizes the radiation detector array RA2 in which the radiation detectors RD1 having high time resolution and high detection sensitivity are two-dimensionally disposed in the matrix. In a configuration in which the side surfaces 1e and 1f and either the semiconductor photodetector 10a or the semiconductor photodetector 10b included in the other radiation detector RD1 oppose each other in the column direction, the plurality of radiation detectors RD1 are two-dimensionally disposed in a smaller space as compared with a configuration in which the semiconductor photodetector 10a and the semiconductor photodetector 10b oppose each other.

In the present embodiment, for example, the scintillation light incident on the side surface 1e of the scintillator 1 included in one radiation detector RD1 tends not to be incident on the scintillator 1 included in another radiation detector RD1, compared with a configuration in which the side surface 1e of the scintillator 1 included in the one radiation detector RD1 and the side surface 1f of the scintillator 1 included in the other radiation detector RD1 oppose each other. In the present embodiment, for example, the scintillation light incident on the side surface 1f of the scintillator 1 included in one radiation detector RD1 tends not to be incident on the scintillator 1 included in another radiation detector RD1, compared with a configuration in which the side surface 1f of the scintillator 1 included in the one radiation detector RD1 and the side surface 1e of the scintillator 1 included in the other radiation detector RD1 oppose each other.

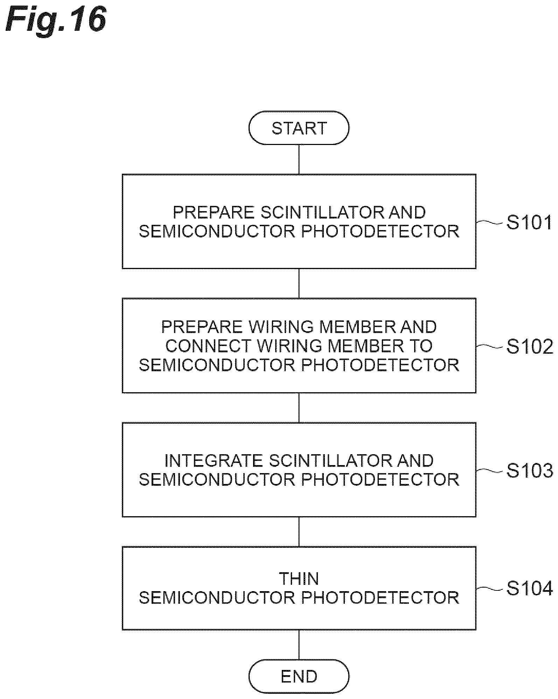

An example of a method for producing the radiation detector RD1 will be described with reference to FIG. 16. Serial orders of steps of the producing method may be interchanged with each other. In an example of the producing method, first, the scintillator 1 and the semiconductor photodetectors 10a and 10b are prepared (S101).

Subsequently, the wiring members 30a and 30b are prepared and connected to the semiconductor photodetectors 10a and 10b (S102). For example, the wiring member 30a is connected to the semiconductor photodetector 10a, and the wiring member 30b is connected to the semiconductor photodetector 10b. The wiring members 30a and 30b each include a conductor 31 and a conductor 32. The conductor 31 of the wiring member 30a is electrically connected to the electrode 17 included in the semiconductor photodetector 10a. The conductor 31 of the wiring member 30b is electrically connected to the electrode 17 included in the semiconductor photodetector 10b. The conductor 32 included in the wiring member 30a is electrically connected to the electrode 18 included in the semiconductor photodetector 10a. The conductor 32 included in the wiring member 30b is electrically connected to the electrode 18 included in the semiconductor photodetector 10b. The conductor 31 included in the wiring member 30a is electrically connected to the electrode 17 included in the semiconductor photodetector 10a via the conductive bump 33, for example. The conductor 31 included in the wiring member 30b is electrically connected to the electrode 17 included in the semiconductor photodetector 10b via the conductive bump 33, for example. The conductor 32 included in the wiring member 30a is connected to the electrode 18 included in the wiring member 30a via the conductive bump 33, for example. The conductor 32 included in the wiring member 30b is connected to the electrode 18 included in the wiring member 30b via the conductive bump 33, for example.

Subsequently, the scintillator 1 and the semiconductor photodetectors 10a and 10b are integral to each other (S103). This integration is achieved, for example, with an adhesive. The semiconductor photodetector 10a is disposed, for example, on the side surface 1c of the scintillator 1. The semiconductor photodetector 10b is disposed, for example, on the side surface 1d of the scintillator 1. Subsequently, the reinforcement body 45 is disposed between the portions 22a and 22b.

Subsequently, the semiconductor photodetectors 10a and 10b are thinned (S104). An element is thinned by, for example, polishing the surfaces 11d and 11f. The polishing of the surfaces 11d and 11f is performed by, for example, mechanical polishing or chemical polishing. The semiconductor photodetectors 10a and 10b are thinned in, for example, the radiation detector array RA1 in which the plurality of radiation detectors RD1 are disposed one-dimensionally. That is, the semiconductor photodetectors 10a and 10b included in the radiation detector array RA1 are thinned. The plurality of thinned radiation detector arrays RA1 are, for example, are individually divided to produce individual radiation detectors RD1. The individual dividing is performed by, for example, dicing. The plurality of thinned radiation detector arrays RA1 may be disposed, for example, to be disposed in the column direction without being individually divided. The radiation detector array RA2 in which the plurality of radiation detector arrays RA1 are two-dimensionally disposed in the matrix may be produced.

The present embodiment includes a method for producing a radiation detector. The method for producing the radiation detector is as follows.

### (Producing Method 1)

A method for producing a radiation detector including:
preparing a scintillator;
preparing a semiconductor photodetector;
integrating the scintillator and the semiconductor photodetector; and
thinning the semiconductor photodetector integrated with the scintillator, in which
a scintillator to be prepared includes a pair of end surfaces opposing each other in a first direction and one side surface coupling the pair of end surfaces, has a length in the first direction which is longer than a length in a second direction orthogonal to the one side surface, the one side surface having a length in the first direction which is longer than a width of the one side surface in a third direction orthogonal to the first direction and the second direction,
the semiconductor photodetector to be prepared includes one semiconductor substrate including a first main surface and a second main surface opposing to each other, and the one semiconductor substrate includes a first portion in which photodetection regions are disposed, and a second portion disposed with the first portion in a direction orthogonal to a direction in which the first main surface and the second main surface oppose each other,
each of the photodetection regions includes a plurality of avalanche photodiodes arranged to operate in Geiger mode and a plurality of quenching resistors electrically connected in series with one of an anode or a cathode of a corresponding avalanche photodiode of the plurality of avalanche photodiodes,
the integrating of the scintillator and the semiconductor photodetector includes integrating the scintillator and the semiconductor photodetector such that the one side surface and the first main surface oppose each other and the first portion is covered with the one side surface and the second portion is exposed from the scintillator, and applying a resin such that the scintillator and the second portion are in contact with each other, and
the thinning of the semiconductor photodetector includes thinning the one semiconductor substrate from the second main surface side.

### (Producing Method 2)

The method for producing a radiation detector according to Producing Method 1, further including:
preparing a wiring member; and
electrically connecting the wiring member to the semiconductor photodetector, in which
the semiconductor photodetector to be prepared further includes a first electrode and a second electrode disposed in the second portion, the first electrode is connected in parallel with the plurality of quenching resistors, and the second electrode is connected in parallel with the other of the anode or the cathode of each of the plurality of avalanche photodiodes,
the wiring member to be prepared includes a first conductor and a second conductor,
the electrical connecting of the wiring member includes connecting the first conductor to the first electrode and connecting the second conductor to the second electrode, and
the applying of the resin includes applying the resin to be in contact with a portion position on the second portion, the portion being included in the wiring member electrically connected to the semiconductor photodetector.

### (Producing Method 3)

The method for producing a radiation detector according to Producing Method 1, in which
the scintillator to be prepared further includes another side surface opposing the one side surface,
the semiconductor photodetector to be prepared includes a first semiconductor photodetector and a second semiconductor photodetector, the first semiconductor photodetector includes the one semiconductor substrate including the first portion and the second portion, the second semiconductor photodetector includes another semiconductor substrate including a first main surface and a second main surface opposing each other, and the other semiconductor substrate includes a third portion in which the photodetection regions are disposed, and a fourth portion disposed with the third portion in the direction orthogonal to a direction in which the first main surface and the second main surface oppose each other,
integrating the scintillator and the semiconductor photodetector includes
integrating the scintillator and the first semiconductor photodetector such that the one side surface and the first main surface oppose each other, the first portion is covered with the one side surface, and the second portion is exposed from the scintillator,
integrating the scintillator and the second semiconductor photodetector such that the other side surface and the first main surface oppose each other, the third portion is covered with the other side surface, and the fourth portion is exposed from the scintillator, and
applying the resin to be in contact with the scintillator and the second portion of the one semiconductor substrate included in the first semiconductor photodetector, and to be in contact with the scintillator and the fourth portion of the other semiconductor substrate included in the second semiconductor photodetector, and
the thinning of the semiconductor photodetector includes thinning the one semiconductor substrate included in the first semiconductor photodetector from the second main surface side, and thinning the other semiconductor substrate included in the second semiconductor photodetector from the second main surface side.

### (Producing Method 4)

The method for producing a radiation detector according to Producing Method 3, further including:
preparing a wiring member; and
electrically connecting the wiring member to the semiconductor photodetector, in which
the first semiconductor photodetector further includes a first electrode and a second electrode disposed in the second portion, and the second semiconductor photodetector further includes a third electrode and a fourth electrode disposed in the fourth portion,
the first electrode is connected in parallel with the plurality of quenching resistors, and the second electrode is connected in parallel with the other of the anode or the cathode of each of the plurality of avalanche photodiodes,
the third electrode is connected in parallel with the plurality of quenching resistors, and the fourth electrode is connected in parallel with the other of the anode or the cathode of each of the plurality of avalanche photodiodes,
the wiring member to be prepared includes a first wiring member and a second wiring member including a first conductor and a second conductor, respectively,
the electrical connecting of the wiring member includes connecting the first conductor of the first wiring member to the first electrode, connecting the second conductor of the first wiring member to the second electrode, connecting the first conductor of the second wiring member to the third electrode, and connecting the second conductor of the second wiring member to the fourth electrode, and
the applying of the resin includes applying the resin to be in contact with a portion of the first wiring member electrically connected to the first semiconductor photodetector, the portion being positioned on the second portion, and a portion of the second wiring member electrically connected to the second semiconductor photodetector, the portion being positioned on the fourth portion.

The embodiments of the present invention have been described above; however, the present invention is not absolutely limited to the above-described embodiments and can be variously modified without departing from the gist of the present invention.

In the radiation detector RD1, when viewed in the second direction D2, the photodetection region 23 does not need to have the outline shape corresponding to the outline shape of the side surface 1c or 1d. In the configuration in which the photodetection region 23 has the outline shape corresponding to the outline shape of the side surface 1c or 1d, as described above, the photodetection region 23 tends not to be disposed at the position of the semiconductor substrate 11a or 11b where no scintillation lights can be received. Therefore, increase in dark count and capacitance in the photodetection region 23 included in the semiconductor substrate 11a or 11b is curbed. Therefore, this configuration more reliably improves the time resolution of the radiation detector RD1.

The radiation detector RD1 does not need to include the base 40a. The configuration in which the radiation detector RD1 includes the base 40a improves the mechanical strength of the semiconductor substrate 11a as described above. The radiation detector RD1 does not need to include the base 40b. The configuration in which the radiation detector RD1 includes the base 40b improves the mechanical strength of the semiconductor substrate 11b as described above. Therefore, this configuration reliably realizes the radiation detector RD1 having high mechanical strength.

The radiation detector RD1 does not need to include the reinforcement body 45. In the configuration in which the radiation detector RD1 includes the reinforcement body 45, as described above, the reinforcement body 45 disposed between the portion 22a and the portion 22b improves the mechanical strength of the portion 22a and the portion 22b. The reinforcement body 45 protects the wiring member 30a positioned in the portion 22a and the wiring member 30b positioned in the portion 22b.

The radiation detector RD1 does not need to include the cover bodies 47a and 47b. When the radiation detector RD1 includes the cover bodies 47a and 47b, for example, the configuration in which each of the cover body 47a and the cover body 47b includes the light reflector 48 improves the light reflection characteristics of the scintillation light. For example, a configuration in which each of the cover body 47a and the cover body 47b includes the electrical insulator 49 improves electrical insulation between the radiation detectors RD1.

The wiring member 30a does not need to be disposed on the same side as the scintillator 1 relative to the semiconductor substrate 11a. In a configuration in which the wiring member 30a is disposed on the same side as the scintillator 1 relative to the semiconductor substrate 11a, there is no need to provide a substrate for connecting the wiring member 30a to the electrodes 17 and 18 included in the semiconductor photodetector 10a through die bonding, for example. The wiring member 30b does not need to be disposed on the same side as the scintillator 1 relative to the semiconductor substrate 11b. In a configuration in which the wiring member 30b is disposed on the same side as the scintillator 1 relative to the semiconductor substrate 11b, there is no need to provide a substrate for connecting the wiring member 30b and the electrodes 17 and 18 included in the semiconductor photodetector 10b through die bonding, for example. Therefore, this configuration more reliably simplifies the configuration of the radiation detector RD1.

The flexibility of the wiring member 30a does not need to be higher than the flexibility of the semiconductor substrate 11a. In a configuration in which the flexibility of the wiring member 30a is higher than the flexibility of the semiconductor substrate 11a, vibration of the wiring member 30a tends not to be transmitted to the semiconductor substrate 11a. The flexibility of the wiring member 30b does not need to be higher than the flexibility of the semiconductor substrate 11b. In a configuration in which the flexibility of the wiring member 30b is higher than the flexibility of the semiconductor substrate 11b, as described above, vibration of the wiring member 30b tends not to be transmitted to the semiconductor substrate 11b. Therefore, this configuration reliably maintains the mechanical strength of the radiation detector RD1.

In the embodiments, the example in which the semiconductor photodetectors are disposed on the two side surfaces 1c and 1d of the scintillator 1, respectively, has been described, but the semiconductor photodetectors may be disposed on the four side surfaces 1c, 1d, 1e, and 1f of the scintillator 1, respectively.

### Reference Signs List

1 Scintillator
1a, 1b End surface
1c, 1d, 1e, 1f Side surface
10a, 10b Semiconductor photodetector
11a, 11b Semiconductor substrate
12 Avalanche photodiode
13 Quenching resistor
14a, 14b Conductive wire
17, 18 Electrode
21a, 21b, 22a, 22b Portion
23 Photodetection region
30a, 30b Wiring member
41, 42 Terminal
45 Reinforcement body
47a, 47b Cover body
48 Light reflector
49 Electrical insulator
51a, 51b, 52a, 52b Portion
D1 First direction
D2 Second direction
D3 Third direction
RA1, RA2 Radiation detector array
RD1 Radiation detector

## Claims

1. A radiation detector comprising:
a scintillator including a pair of end surfaces opposing each other in a first direction, and a first side surface and a second side surface opposing each other in a second direction intersecting the first direction and coupling the pair of end surfaces, the scintillator having a rectangular shape when viewed in the first direction;
a first semiconductor photodetector including a first semiconductor substrate disposed to oppose the first side surface;
a second semiconductor photodetector including a second semiconductor substrate disposed to oppose the second side surface;
a first wiring member electrically connected to the first semiconductor photodetector; and
a second wiring member electrically connected to the second semiconductor photodetector, wherein
a length of the scintillator in the first direction is longer than both of a length of the scintillator in the second direction and a length of the scintillator in a third direction parallel to the first side surface,
a length of the first side surface in the first direction is longer than a width of the first side surface in the third direction,
a length of the second side surface in the first direction is longer than a width of the second side surface in the third direction,
the first semiconductor substrate includes
a first portion covered with the first side surface, and
a second portion disposed with the first portion in the first direction and exposed from the first side surface,
the second semiconductor substrate includes
a third portion covered with the second side surface, and
a fourth portion disposed with the third portion in the first direction and exposed from the second side surface,
each of the first semiconductor photodetector and the second semiconductor photodetector includes a photodetection region including a plurality of avalanche photodiodes arranged to operate in Geiger mode and a plurality of quenching resistors electrically connected in series with one of an anode or a cathode of a corresponding avalanche photodiode of the plurality of avalanche photodiodes,
the first semiconductor photodetector includes
a first electrode to which the plurality of quenching resistors included in the first semiconductor photodetector are connected in parallel; and
a second electrode to which another of the anode or the cathode of each of the plurality of avalanche photodiodes included in the first semiconductor photodetector is electrically connected in parallel,
the second semiconductor photodetector includes
a third electrode to which the plurality of quenching resistors included in the second semiconductor photodetector are connected in parallel; and
a fourth electrode to which another of the anode or the cathode of each of the plurality of avalanche photodiodes included in the second semiconductor photodetector is electrically connected in parallel,
the photodetection region included in the first semiconductor photodetector is disposed in the first portion,
the first electrode and the second electrode are disposed in the second portion,
the photodetection region included in the second semiconductor photodetector is disposed in the third portion,
the third electrode and the fourth electrode are disposed in the fourth portion,
the first wiring member includes a conductor electrically connected to the first electrode and a conductor connected to the second electrode, and
the second wiring member includes a conductor electrically connected to the third electrode and a conductor connected to the fourth electrode.

2. The radiation detector according to claim 1, wherein
when viewed in the second direction, the photodetection region included in the first semiconductor substrate has an outline shape corresponding to an outline shape of the first side surface, and
when viewed in the second direction, the photodetection region included in the second semiconductor substrate has an outline shape corresponding to an outline shape of the second side surface.

3. The radiation detector according to claim 1 or 2, further comprising
a reinforcement body disposed between the second portion and the fourth portion, wherein
the reinforcement body covers the second portion and the fourth portion and couples the second portion and the fourth portion.

4. The radiation detector according to any one of claims 1 to 3, wherein
the first semiconductor substrate includes a first surface opposing the scintillator in the second direction and a second surface opposing the first surface in the second direction,
the second semiconductor substrate includes a third surface opposing the scintillator in the second direction and a fourth surface opposing the third surface in the second direction, and
the second surface and the fourth surface include polished surfaces.

5. The radiation detector according to any one of claims 1 to 4, further comprising:
a first base including a fifth surface and a sixth surface opposing each other in the second direction and be disposed such that the first semiconductor substrate is positioned between the fifth surface and the scintillator;
a second base including a seventh surface and an eighth surface opposing each other in the second direction and be disposed such that the second semiconductor substrate is positioned between the seventh surface and the scintillator;
a first terminal and a second terminal disposed on the fifth surface;
a third terminal and a fourth terminal disposed on the seventh surface;
a first wire electrically connecting the first terminal and the first electrode;
a second wire electrically connecting the second terminal and the second electrode;
a third wire electrically connecting the third terminal and the third electrode; and
a fourth wire electrically connecting the fourth terminal and the fourth electrode, wherein
the first base includes a fifth portion covered with the first semiconductor substrate and a sixth portion disposed with the fifth portion in the first direction and exposed from the first semiconductor substrate,
the second base includes a seventh portion covered with the second semiconductor substrate and an eighth portion disposed with the seventh portion in the first direction and exposed from the second semiconductor substrate,
the first terminal and the second terminal are positioned on the sixth portion, and
the third terminals and the fourth terminal are positioned on the eighth portion.

6. The radiation detector according to any one of claims 1 to 5, further comprising:
a first cover body disposed such that the first semiconductor substrate is positioned between the first cover body and the scintillator; and
a second cover body disposed such that the second semiconductor substrate is positioned between the second cover body and the scintillator, wherein
each of the first cover body and the second cover body includes at least one of a light reflector and an electrical insulator.

7. The radiation detector according to any one of claims 1 to 6, wherein
the first wiring member is disposed on the same side as the scintillator relative to the first semiconductor substrate, and
the second wiring member is disposed on the same side as the scintillator relative to the second semiconductor substrate.

8. The radiation detector according to any one of claims 1 to 4 or 6, wherein
at least a part of the first wiring member and the scintillator are disposed in front of the same surface of the first semiconductor substrate, and
at least a part of the second wiring member and the scintillator are disposed in front of the same surface of the second semiconductor substrate.

9. The radiation detector according to claim 5, wherein
at least a part of the first wiring member and the scintillator are disposed in front of the same surface of the first base, and
at least a part of the second wiring member and the scintillator are disposed in front of the same surface of the second base.

10. The radiation detector according to any one of claims 1 to 9, wherein
the first wiring member and the second wiring member and the first semiconductor substrate and the second semiconductor substrate have flexibility,
the flexibility of the first wiring member is higher than the flexibility of the first semiconductor substrate, and
the flexibility of the second wiring member is higher than the flexibility of the second semiconductor substrate.

11. A radiation detector array comprising
a plurality of radiation detectors disposed one-dimensionally, wherein
each of the plurality of radiation detectors is the radiation detector according to any one of claims 1 to 10,
the scintillator further includes a pair of third side surfaces coupling the pair of end surfaces and coupling the first side surface and the second side surface, and
any two radiation detectors adjacent to each other, among the plurality of radiation detectors, are disposed such that the third side surface of the scintillator included in one radiation detector and the third side surface of the scintillator included in another radiation detector oppose each other.

12. The radiation detector array according to claim 11, wherein
the first semiconductor photodetectors included in the plurality of radiation detectors are integrally formed, and
the second semiconductor photodetectors included in the plurality of radiation detectors are integrally formed.

13. A radiation detector array comprising
a plurality of radiation detectors disposed two-dimensionally in a matrix, wherein
each of a plurality of radiation detectors disposed in a row direction of the plurality of radiation detectors is the radiation detector array according to claim 11 or 12, and
any two radiation detectors adjacent to each other in a column direction of the plurality of radiation detectors are disposed such that either the first semiconductor photodetector or the second semiconductor photodetector included in one radiation detector and either the first semiconductor photodetector or the second semiconductor photodetector included in the other radiation detector oppose each other in the column direction.

14. A radiation detector array comprising
a plurality of radiation detectors disposed one-dimensionally, wherein
each of the plurality of radiation detectors is the radiation detector according to any one of claims 1 to 10,
the scintillator further includes a pair of third side surfaces coupling the pair of end surfaces and coupling the first side surface and the second side surface, and
any two radiation detectors adjacent to each other, among the plurality of radiation detectors, are disposed such that the third side surface of the scintillator included in one radiation detector and either the first semiconductor photodetector or the second semiconductor photodetector included in another radiation detector oppose each other.

15. A radiation detector array comprising
a plurality of radiation detectors disposed two-dimensionally in a matrix, wherein
each of a plurality of radiation detectors disposed in a row direction of the plurality of radiation detectors is the radiation detector array according to claim 14, and
any two radiation detectors adjacent to each other in a column direction, among the plurality of radiation detectors, are disposed such that the third side surface of the scintillator included in one radiation detector and either the first semiconductor photodetector or the second semiconductor photodetector included in the other radiation detector oppose each other in the column direction.
